# EUROPÄISCHE PATENTSCHRIFT

(11) **EP 3 701 195 B1**
(45) Veröffentlichungstag und Bekanntmachung des Hinweises auf die Patenterteilung: **03.06.2026**
(21) Anmeldenummer: 18795969.7
(22) Anmeldetag: 23.10.2018
(51) Int. Cl.: F24D 19/10, G05B 17/02, G05B 15/02

(54) **ENERGIEMANAGEMENTSYSTEM ZUM VORAUSSCHAUENDEN ERMITTELN UND REGELN EINER VORLAUFTEMPERATUR EINER GEBÄUDEHEIZUNG**
POWER MANAGEMENT SYSTEM FOR PROACTIVELY DETERMINING AND REGULATING A FLOW TEMPERATURE OF A BUILDING HEATING SYSTEM
SYSTÈME DE GESTION D'ÉNERGIE PERMETTANT UNE DÉTERMINATION ET UNE RÉGULATION ANTICIPÉES D'UNE TEMPÉRATURE DE DÉPART D'UN DISPOSITIF DE CHAUFFAGE D'UN BÂTIMENT

(30) Priorität: 27.10.2017 DE 102017125282
(43) Veröffentlichungstag der Anmeldung: 02.09.2020
(73) Patentinhaber: Optimierma GmbH, 1020 Wien (AT)
(72) Erfinder: KAEFER, Peter, 8043 Graz (AT)
(74) Vertreter: Canzler & Bergmeier Patentanwälte Partnerschaft mbB
(86) Internationale Anmeldenummer: PCT/EP2018/079025
(87) Internationale Veröffentlichungsnummer: WO 2019/081501

(56) Entgegenhaltungen:
- EP-A1- 2 953 420
- WO-A2-2011/000547
- DE-A1- 102004 032 562
- DE-A1- 102008 003 866
- DE-A1- 102010 042 298

## Beschreibung

Die vorliegende Erfindung betrifft ein Energiemanagementsystem zum vorausschauenden Ermitteln und Regeln einer Vorlauftemperatur einer Gebäudeheizung zumindest eines Gebäudes mit einem zum Anordnen in einem Gebäude vorgesehenen Steuergerät, das eine gebäudeinterne Schnittstelle, über die das Steuergerät eine Raumtemperatur zumindest eines Gebäuderaums empfangen kann und mit einer Gebäudeheizung verbunden werden kann, über die das Steuergerät zum Regeln der Vorlauftemperatur eine Soll-Vorlauftemperatur der Gebäudeheizung übermitteln und eine Ist-Vorlauftemperatur von der Gebäudeheizung empfangen kann, und eine gebäudeexterne Schnittstelle aufweist, und mit einer gebäudeexternen Steuereinheit, die über die gebäudeexterne Schnittstelle mit dem Steuergerät zumindest zeitweise verbindbar ist, um Gebäudedaten vom Steuergerät empfangen und/oder Steuerdaten an das Steuergerät übermitteln zu können. Außerdem betrifft die Erfindung ein Steuergerät zur Verwendung in einem Energiemanagementsystem sowie ein Arbeitsverfahren für ein Energiemanagementsystem und/oder das Steuergerät.

Aus der DE 601 19 701 T2 ist ein Verfahren und eine Vorrichtung zum Heizen und Kühlen von Gebäuden und Häusern, in die ein typischerweise 5 - 15 Tage vorhaltender Wärmespeicher mit Wärmepumpe und Belüftung eingebaut ist, um in einer speziellen optimierten Synergie zu arbeiten. Nachteilig daran ist, dass das Gebäude nicht optimal geheizt wird.

In der WO 2011/000547 A2 ist ein Verfahren zum Heizen oder Kühlen eines Gebäudes mit Hilfe einer thermoaktiven Decke offenbart.

Aufgabe der vorliegenden Erfindung ist es somit, die Gebäudeheizung zu verbessern.

Die Aufgabe wird gelöst durch ein Energiemanagementsystem, ein Steuergerät sowie ein Arbeitsverfahren mit den Merkmalen der unabhängigen Patentansprüche.

Vorgeschlagen wird ein Energiemanagementsystem zum vorausschauenden Ermitteln und Regeln einer Vorlauftemperatur einer Gebäudeheizung eines Gebäudes. Das Energiemanagementsystem weist ein Steuergerät auf, das zum Anordnen in dem Gebäude vorgesehen ist. Das Steuergerät umfasst zumindest eine gebäudeinterne Schnittstelle, über die das Steuergerät eine Raumtemperatur zumindest eines Gebäuderaums empfangen kann. In dem zumindest einen Gebäuderaum kann beispielsweise ein Raumtemperatursensor angeordnet sein, der die Raumtemperatur misst und an das Steuergerät übermittelt.

Des Weiteren kann das Steuergerät über die gebäudeinterne Schnittstelle mit der Gebäudeheizung verbunden werden, wobei über die gebäudeinterne Schnittstelle das Steuergerät zum Regeln der Vorlauftemperatur eine Soll-Vorlauftemperatur an die Gebäudeheizung übermitteln und eine Ist-Vorlauftemperatur von der Gebäudeheizung empfangen kann.

Außerdem weist das Steuergerät eine gebäudeexterne Schnittstelle auf, so dass das Steuergerät über die gebäudeexterne Schnittstelle mit einer gebäudeexternen Steuereinheit zumindest zeitweise verbindbar ist. Über die gebäudeexterne Schnittstelle kann die gebäudeexterne Steuereinheit Gebäudedaten vom Steuergerät empfangen und/oder Steuerdaten an das Steuergerät übermitteln.

Erfindungsgemäß weist das Steuergerät einen Algorithmus auf, mittels dem in Abhängigkeit von zumindest prognostizierten Wetterdaten die Soll-Vorlauftemperatur der Gebäudeheizung bestimmbar ist. Zusätzlich oder alternativ kann auch die gebäudeexterne Steuereinheit den Algorithmus aufweisen, um in Abhängigkeit von zumindest den prognostizierten Wetterdaten die Soll-Vorlauftemperatur der Gebäudeheizung zu bestimmen. Der Algorithmus kann hierfür als ausführbarer Programmcode auf dem Steuergerät und/oder auf der gebäudeexternen Steuereinheit abgespeichert sein. Dadurch können vorausschauend die Wettereinflüsse in einer nahen Zukunft, beispielsweise für einen Tag, mit bei der Beheizung des Gebäudes berücksichtigt werden. Dadurch kann Heizenergie eingespart werden, was Kosten einspart und auch ökologisch vorteilhaft ist.

Ein Effekt beispielsweise, der zum Beheizen des Gebäudes beitragen kann, ist die Sonneneinstrahlung. Sagt die Wetterprognose beispielsweise für Nachmittag Sonnenschein voraus, kann in dem Gebäuderaum, der für die Abendstunden auf 23°C aufgewärmt werden soll, ein Wärmeeintrag ausgebildet sein. Dies kann der Algorithmus berücksichtigen und die Soll-Vorlauftemperatur dementsprechend vorab ermitteln, woraufhin das Steuergerät die Soll-Vorlauftemperatur an die Gebäudeheizung übermittelt, die die Soll-Vorlauftemperatur entsprechend regelt.

Des Weiteren können die prognostizierten Wetterdaten in Wintermonaten eine Außentemperatur von 0°C für Nachmittagsstunden und -5°C für die Abendstunden voraussagen. Das Steuergerät kann mittels des Algorithmus diese Temperaturverhältnisse berücksichtigen und entsprechend die Soll-Vorlauftemperatur vorab ermitteln und regeln. Das Steuergerät bzw. der Algorithmus wird beispielsweise eine höhere Soll-Vorlauftemperatur veranschlagen, als wenn die Außentemperatur 15°C betragen würde.

Mit Hilfe des Algorithmus kann außerdem auch ein zeitlicher Verlauf der Soll-Vorlauftemperatur bestimmt werden. Dies kann beispielsweise vorteilhaft sein, wenn das Aufwärmen einen relativ langen Zeitraum, beispielsweise einen Tag, in Anspruch nimmt. Das Steuergerät kann in Abhängigkeit der prognostizierten Wetterdaten den Verlauf der Soll-Vorlauftemperatur beispielsweise für Morgenstunden anders einstellen als für Nachmittagsstunden, da ein Beitrag der Sonneneinstrahlung am Nachmittag höher sein kann. Außerdem kann nachmittags die Außentemperatur höher sein als beispielsweise nachts, so dass der Algorithmus auch diesen Effekt berücksichtigen kann.

In einer vorteilhaften Weiterbildung der Erfindung ist die gebäudeexterne Steuereinheit eine internetbasierte Softwareplattform. Dadurch kann auf einfachem Wege eine Verbindung zwischen dem Steuergerät und der gebäudeexternen Steuereinheit hergestellt werden. Außerdem kann über das Internet von überall eine Verbindung zur gebäudeexternen Steuereinheit aufgebaut werden.

Ferner ist es von Vorteil, wenn die Gebäudeheizung eine im Gebäude angeordnete Heizanlage umfasst. Die Heizanlage umfasst ein gebäudeinternes Heizungsnetz, das Rohrleitung und/oder Heizkörper aufweisen kann. Dadurch kann das Gebäude sich selbst unabhängig beheizen. Zusätzlich oder alternativ kann die Gebäudeheizung auch ein Fernwärmenetz umfassen, wobei die Heizenergie mittels einer Anschlussleitung ins Gebäude geführt werden kann. Das Fernwärmenetz kann die Heizenergie von einem Blockheizkraftwerk, einer Großwärmepumpe o.ä. erhalten und an das Gebäude liefern. Der Vorteil des Fernwärmenetzes liegt darin, dass diese in der Regel einen höheren Wirkungsgrad aufweisen, als Heizanlagen im Gebäude. Das Steuergerät kann dabei auch über die gebäudeinterne Schnittstelle eine Verbindung zum Fernwärmenetz herstellen. Vorzugsweise bildet das Steuergerät über die gebäudeinterne Schnittstelle eine Verbindung zu einer Übergabestation aus, die die Heizenergie vom Fernwärmenetz auf das gebäudeinterne Heizungsnetz überträgt.

Vorteilhaft ist es auch, wenn die Gebäudeheizung eine Wärmepumpe, einen Heizstab, einen Heizkessel, einen Pufferspeicher und/oder eine Klimaanlage umfasst. Dadurch kann die Heizanlage im Gebäude oder das Fernwärmenetz in der Heizleistung unterstützt werden. Im Falle des Fernwärmenetzes ist natürlich der Heizstab, der Heizkessel, die Wärmepumpe, die Klimaanlage oder der Pufferspeicher entsprechend dimensioniert. Mit Hilfe des Pufferspeichers kann beispielsweise überschüssige Energie für einen späteren Zeitpunkt zwischengespeichert werden.

Vorteilhaft ist es, wenn das Steuergerät und/oder die gebäudeexterne Steuereinheit derart ausgebildet ist, dass dieses über eine Eingangsschnittstelle die prognostizierten, tatsächlichen Wetterdaten, eine Stromnetzstabilität, einen Strommarktpreis und/oder Temperaturen vom Fernwärmenetz empfangen kann. Die Temperaturen des Fernwärmenetzes können beispielsweise die Vorlauftemperaturen sein, mit welchen das zirkulierende Wasser die Gebäude mit Wärmeenergie versorgt. Zusätzlich oder alternativ kann das Steuergerät und/oder die gebäudeexterne Steuereinheit die genannten Daten auch abspeichern. Die prognostizierten und/oder tatsächlichen Wetterdaten können beispielsweise von einer Wetterstation in der Umgebung des Gebäudes zum Steuergerät übertragen werden. Mit Hilfe von prognostizierten und tatsächlichen Wetterdaten kann die Soll-Vorlauftemperatur genauer berechnet und geregelt werden. Die tatsächlichen Wetterdaten können beispielsweise herangezogen werden, wenn keine prognostizierten Wetterdaten an das Steuergerät und/oder die gebäudeexterne Steuereinheit übermittelt werden können.

Ebenfalls ist es von Vorteil, wenn die prognostizierten und/oder tatsächlichen Wetterdaten online von zumindest einer Wetterstation empfangbar sind. Dadurch kann beispielsweise auf Wetterdaten von einem Wetterdienst zurückgegriffen werden. Zusätzlich oder alternativ können die Wetterdaten die Außentemperatur, die Sonneneinstrahlung, den Bewölkungsgrad, die Niederschlagswahrscheinlichkeit und/oder die Windstärke umfassen. Dadurch können die wesentlichen Wettereinflüsse auf das Gebäude mit einberechnet werden. Die Wetterstation kann die Wetterdaten an das Steuergerät und/oder die gebäudeexterne Steuereinheit übermitteln.

Vorteilhaft ist es, wenn das Steuergerät und/oder die gebäudeexterne Steuereinheit den Gebäudestandort ermitteln kann. Im Steuergerät kann beispielsweise ein GPS (Global Positioning System) integriert sein, so dass das Steuergerät selbstständig die Position des Gebäudes ermitteln kann. Zusätzlich oder alternativ kann der Gebäudestandort auch mittels einer von einem Benutzer eingegebenen Postleitzahl ermittelt werden. Dadurch kann dem Steuergerät auf einfache Weise der Gebäudestandort mitgeteilt werden.

Weiterhin ist es von Vorteil, wenn das Steuergerät und/oder die gebäudeexterne Steuereinheit online in Abhängigkeit des Gebäudestandorts zumindest eine in der Gegend des Gebäudes befindliche Onlinewetterstation ermittelt und/oder sich mit dieser zum Abruf der Wetterdaten verbindet. Dadurch können auf einfache Weise zuverlässige Wetterdaten in der Umgebung des Gebäudes erhalten werden.

Ferner weist das Steuergerät ein erstes Analyseprogramm auf, mittels dem eine Wärmekapazität des Gebäudes ermittelbar und/oder schätzbar ist. Das erste Analyseprogramm kann zusätzlich oder alternativ auch in der die gebäudeexterne Steuereinheit angeordnet sein. Das erste Analyseprogramm ermittelt außerdem in einem iterativen Prozess die Wärmekapazität.

Die Wärmekapazität kann dabei eine Kenngröße des Gebäudes sein. Die Wärmekapazität ist ein Maß dafür, wieviel Wärme das Gebäude speichern kann. Die Wärmekapazität kann beispielsweise von der Größe des Gebäudes abhängen. Ein größeres Gebäude kann eine höhere Wärmekapazität aufweisen. Die Wärmekapazität kann aber auch von der Gebäudemasse abhängen, wobei dickere Wände mehr Wärme speichern können, so dass diese eine höhere Wärmekapazität aufweisen. Die Wärmekapazität kann aber auch von einer Gebäudedämmung abhängen. Eine höhere Wärmekapazität kann dabei vorteilhaft sein. Beispielsweise kühlt ein Gebäude mit einer hohen Wärmekapazität nur langsam aus. Das Gebäude reagiert langsam auf eine Temperaturänderung, wenn es eine hohe Wärmekapazität aufweist. Mit Hilfe des ersten Analyseprogramms kann die Wärmekapazität des Gebäudes ermittelt werden. Mittels des ersten Analyseprogramms kann auch die Wärmekapazität von zumindest einem Gebäuderaum ermittelt werden.

Des Weiteren kann sich die Wärmekapazität des Gebäudes auch ändern, so dass die Ermittlung der Wärmekapazität des Gebäudes und/oder zumindest eines Gebäuderaums in bestimmten Intervallen, beispielsweise täglich, wöchentlich oder monatlich, durchgeführt werden kann.

Die Wärmekapazität kann ebenfalls bei der vorausschauenden Ermittlung der Soll-Vorlauftemperatur vom Algorithmus berücksichtigt werden. Dieser Aspekt wird beispielsweise berücksichtigt, wenn zumindest ein Gebäuderaum für Abendstunden auf beispielsweise 23°C geheizt werden soll. Bei einer höheren Wärmekapazität muss beispielsweise mit dem Aufwärmvorgang früher begonnen werden, als bei einem Gebäude mit einer geringeren Wärmekapazität, da ein hoher Anteil der Wärmeenergie beispielsweise dazu verwendet wird, ein dickes Mauerwerk aufzuwärmen. Zusätzlich oder alternativ kann, um den zumindest einen Gebäuderaum bis zu den Abendstunden aufzuwärmen, auch die Soll-Vorlauftemperatur erhöht werden, so dass mehr Heizleistung für den Gebäuderaum zur Verfügung steht.

Die Wärmekapazität des Gebäudes kann beispielsweise dadurch ermittelt werden, dass das Gebäude um einen bestimmten Betrag erwärmt oder abgekühlt wird. Wird das Gebäude beispielsweise mit einer bekannten Ist-Vorlauftemperatur über eine bestimmte Zeit beheizt, kann das Steuergerät daraus die Heizenergie berechnen, die dem Gebäude zur Erwärmung zugeführt wurde. Das Steuergerät und/oder die gebäudeexterne Steuereinheit kann dann einen Raumtemperaturverlauf aufnehmen. Beispielsweise aus der Steigung des Raumtemperaturverlaufs und/oder der Heizleistung der Gebäudeheizung kann die Wärmekapazität ermittelt werden. Aus einer Messung der Raumtemperatur des Gebäudes kann auch eine Temperaturdifferenz vor und nach dem Erwärmen ermittelt werden. Daraus kann die Wärmekapazität des Gebäudes berechnet werden.

Ferner kann sich die Wärmekapazität auch bei einem Wetterwechsel bemerkbar machen, was das Steuergerät ebenfalls mittels des Algorithmus berücksichtigen kann. Eine vergleichsweise hohe Wärmekapazität des Gebäudes (beispielsweise, weil das Gebäude dicke Wände aufweist) führt dazu, dass ein Gebäude bei einem prognostizierten Temperatursturz nur langsam auskühlt. Der Algorithmus kann dies berücksichtigen und die Soll-Vorlauftemperatur entsprechend einstellen. Da das Gebäude beispielsweise nur langsam auskühlt, muss nicht mit Hilfe einer hohen Soll-Vorlauftemperatur gegengeregelt werden, um beispielsweise die 23°C für die Abendstunden bereitstellen zu können.

Eine vorteilhafte Weiterbildung der Erfindung ist es, wenn das Steuergerät mit dem ersten Analyseprogramm die Wärmekapazität des Gebäudes schätzt und/oder berechnet. Das Steuergerät führt dies mit Hilfe eines iterativen Prozesses durch. Die Schätzung kann beispielsweise angewandt werden, wenn nicht alle Parameter des Gebäudes bekannt sind. Zusätzlich oder alternativ kann die Wärmekapazität berechnet werden, wenn alle Parameter des Gebäudes bekannt sind. Damit kann die Wärmekapazität genauer bestimmt werden.

Ferner weist das Steuergerät und/oder die gebäudeexterne Steuereinheit ein zweites Analyseprogramm auf, mittels dem ein passiver Wärmefluss in das Gebäude hinein und/oder aus dem Gebäude hinaus berechnet und/oder abgeschätzt werden kann. Der passive Wärmefluss kann dabei die Wärmemenge sein, die beispielsweise durch Wärmeleitung, Wärmestrahlung und/oder Wärmekonvektion aus dem Gebäude austritt. Der passive Wärmefluss kann somit negativ sein, d.h. es tritt mehr Wärmeenergie aus dem Gebäude aus, als von außen in das Gebäude eintritt. Der passive Wärmefluss kann aber auch eine Wärmemenge sein, die beispielsweise durch Wärmeleitung, Wärmestrahlung und/oder Wärmekonvektion in das Gebäude eintritt. Der passive Wärmefluss kann somit positiv sein, d.h. es tritt von außen mehr Energie in das Gebäude ein, als austritt.

Zusätzlich oder alternativ kann das zweite Analyseprogramm den passiven Wärmefluss auch anhand von Gebäudeparametern berechnen und/oder abschätzen. In die Berechnung und/oder Abschätzung können auch die prognostizierten und/oder tatsächlichen Wetterdaten einfließen. Die Gebäudeparameter können beispielsweise einen Grad der Gebäudedämmung, eine Gebäudeaußenfläche und/oder eine Ausrichtung des Gebäudes umfassen. Desto besser das Gebäude gedämmt ist, desto geringer ist beispielsweise der passive Wärmefluss durch Wärmeleitung in das Gebäude hinein oder aus dem Gebäude hinaus.

Die Gebäudeparameter können aber auch eine Fläche und/oder eine Anordnung von Fensterflächen des Gebäudes umfassen. Durch die Fenster kann beispielsweise ein Anteil an Sonnenstrahlung ins Gebäude gelangen und zur Heizleistung beitragen. Der passive Wärmefluss kann in diesem Fall positiv sein. Es tritt also von außen mehr Wärmeenergie in das Gebäude ein, als austritt. Mit Hilfe des positiven passiven Wärmeflusses kann die Gebäudeheizung beim Beheizen des Gebäudes unterstützt werden.

Das Steuergerät kann somit beispielsweise als prognostizierte Wetterdaten erhalten, dass ein Tag mit viel Sonnenschein erwartet wird. Anhand der Gebäudeparameter, insbesondere einer Größe und/oder Orientierung der Fensterflächen des Gebäudes, kann das Steuergerät berechnen, wie viel passiver Wärmefluss von außerhalb des Gebäudes in das Gebäude eintritt und zur Heizleistung beiträgt. Das Steuergerät bzw. der Algorithmus kann dies bei der Ermittlung der Soll-Vorlauftemperatur berücksichtigen. Die Soll-Vorlauftemperatur kann entsprechend geringer geregelt werden, so dass Heizenergie eingespart werden kann. Das Steuergerät kann dabei auch anhand der prognostizierten Wetterdaten berücksichtigen, zu welcher Tageszeit welcher passive Wärmefluss erwartet wird. Daraus kann das Steuergerät, insbesondere der Algorithmus, prädiktiv die Soll-Vorlauftemperatur berechnen.

Ferner weist das Steuergerät ein drittes Analyseprogramm auf, mit dem zumindest ein zeitlicher Raumtemperaturverlauf aufgezeichnet, ermittelt und/oder abgeschätzt werden kann. Der Raumtemperaturverlauf gibt dabei den zeitlichen Verlauf der über die gebäudeinterne Schnittstelle und/oder der Eingangsschnittstelle empfangenen Raumtemperatur wieder. Dadurch kann beispielsweise ein Raumtemperaturverlauf für einen Tag, eine Woche oder ein Jahr usw. erstellt werden.

Zusätzlich oder alternativ kann das Steuergerät derart ausgebildet sein, dass dieses anhand des passiven Wärmeflusses, der Wärmekapazität, der Ist-Vorlauftemperatur und/oder der Soll-Vorlauftemperatur den zeitlichen Raumtemperaturverlauf vorausberechnet. Wie oben beschrieben, kann der passive Wärmefluss von den prognostizierten Wetterdaten abhängen. Wenn beispielsweise ein sonniger Tag bevorsteht, kann der passive Wärmefluss positiv sein, so dass Wärmeenergie von außen in das Gebäude fließt. Dieser positive passive Wärmefluss kann die Gebäudeheizung unterstützen. Der passive Wärmefluss kann somit auch den Raumtemperaturverlauf für den Tag beeinflussen.

Zusätzlich oder alternativ kann das Steuergerät auch die Wärmekapazität des Gebäudes berücksichtigen. Weist das Gebäude beispielsweise ein dickes Mauerwerk auf, wird sich der Raumtemperaturverlauf im Vergleich zu einem Gebäude mit dünneren Wänden einen flacheren Verlauf aufweisen. Die Raumtemperatur wird sich langsamer ändern.

Ferner kann ein Gebäude mit dünneren Wänden einen anderen Raumtemperaturverlauf aufweisen, als ein Gebäude mit dickeren Wänden. Die Wärmekapazität des Gebäudes kann auch vom Material des Gebäudes abhängen.

Diese Faktoren kann das Steuergerät berücksichtigen und daraus den zeitlichen Raumtemperaturverlauf vorausberechnen. Zusätzlich oder alternativ kann der Raumtemperaturverlauf auch von der gebäudeexternen Steuereinheit ermittelt, abgeschätzt und/oder vorausberechnet werden.

Soll beispielhaft zumindest ein Gebäuderaum um 10°C über einen Zeitraum von drei Stunden erwärmt werden und das Gebäude weist eine hohe Wärmekapazität auf, muss die Gebäudeheizung eine hohe Heizleistung erbringen. Zumindest ein Teil der Heizleistung kann dabei vom passiven Wärmefluss erbracht werden, wenn beispielsweise ein Tag mit vielen Sonnenstunden bevorsteht und das Gebäude eine hohe Anzahl an Fenstern aufweist. Dies kann das Steuergerät und/oder die gebäudeexterne Steuereinheit bzw. der Algorithmus berücksichtigen, um die Soll-Vorlauftemperatur zu ermitteln und zu regeln.

Außerdem ist es vorteilhaft, wenn das dritte Analyseprogramm den zumindest einen Raumtemperaturverlauf in Abhängigkeit der Wetterdaten, des passiven Wärmeflusses, der Ist-Vorlauftemperatur und/oder der Soll-Vorlauftemperatur analysiert. Das dritte Analyseprogramm kann beispielsweise den Raumtemperaturverlauf eines vollen Tages (24 Stunden) analysieren. Das dritte Analyseprogramm kann beispielsweise den Raumtemperaturverlauf während einer Nacht analysieren, währenddessen keine Sonnenstrahlung zum passiven Wärmefluss beiträgt. Ferner kann mittels der Wetterdaten die Außentemperatur während der Nacht bekannt sein. Des Weiteren sind die Ist-Vorlauftemperaturen zu jedem Zeitpunkt bekannt. Mit Hilfe der Analyse des Raumtemperaturverlaufs kann beispielsweise eine Steigung berechnet werden. Die Steigung kann beispielsweise die Änderung der Raumtemperatur nach der Zeit sein. Daraus können die Einflüsse der Wetterdaten und/oder der Wärmekapazität auf den Raumtemperaturverlauf analysiert werden. Bei einem in der Zukunft ähnlichen Szenario (also bei einem gleichen Ausgangszustand), also wenn beispielsweise die Außentemperatur gleich oder zumindest ähnlich ist, kann wieder darauf geschlossen werden, wie sich die Raumtemperatur mit der Zeit ändert.

Des Weiteren kann das dritte Analyseprogramm zumindest eine Raumreaktionszeit ermitteln. Die Raumreaktionszeit kann beispielsweise eine Zeit sein, bei der sich bei einer gegebenen Heizleistung die Raumtemperatur in zumindest einem Gebäuderaum um 1°C ändert. Von der Raumreaktionszeit hängt beispielsweise ab, wann zu heizen begonnen werden muss, um zu einer bestimmten Zeit, beispielsweise abends, eine Temperatur von 23°C zu erreichen.

Ferner kann auch eine Gebäudereaktion mittels des dritten Analyseprogramms ermittelt werden. Die Gebäudereaktion kann beispielsweise umfassen, bei welchen prognostizierten und/oder tatsächlichen Wetterdaten sich das Gebäude erwärmt ohne eine Heizleistung durch die Gebäudeheizung zu erbringen.

Die Gebäudereaktion kann aber auch eine Reaktion, insbesondere Temperaturänderung, des Gebäudes sein, wenn das Gebäude mit einer bestimmten Heizenergiemenge beheizt wird.

Ebenso ist es vorteilhaft, wenn das dritte Analyseprogramm zur Ermittlung des Gebäudetemperaturverlaufs anhand der Wetterdaten einen Wetterwechsel ermittelt. Die Wetterdaten können dabei die prognostizierten und/oder die tatsächlichen Wetterdaten sein. Ermittelt beispielsweise das dritte Analyseprogramm den Gebäudetemperaturverlauf für z.B. die kommenden 12 bis 24 Stunden voraus, kann es vorteilhaft sein, einen Wetterwechsel, beispielsweise von Sonnenschein auf Regen, zu berücksichtigen. Daraus kann ermittelt werden, dass sich beispielsweise der passive Wärmefluss verringern wird. Dieser Anteil der Heizleistung wird somit entfallen, so dass ein steigender Gebäudetemperaturverlauf flacher ausfallen wird, als wenn der passive Wärmefluss höher wäre. Mit Hilfe des dritten Analyseprogramms kann beispielsweise ein Anfangszeitpunkt, ein Endzeitpunkt und/oder eine Wetterwechselart ermittelt werden. Dadurch kann der Gebäudetemperaturverlauf genauer ermittelt werden. Einen derartigen Zeitpunkt des Wetterwechsels kann das Steuergerät mit dem Algorithmus berücksichtigen, um beispielsweise die Soll-Vorlauftemperatur ab diesem Zeitpunkt entsprechend zu erhöhen, wenn der Wetterwechsel von Sonnenschein auf Regen stattfindet.

Vorteilhaft ist es auch, wenn das dritte Analyseprogramm zur Ermittlung der Gebäudereaktionszeit ein Zeitfenster ermittelt, innerhalb dessen die Raumtemperatur konstant bleibt. Das Zeitfenster kann auch bestimmt werden, in dem die Raumtemperatur in einer festgelegten Toleranz konstant ist. Das dritte Analyseprogramm kann die Gebäudereaktionszeit beispielsweise beginnend zum Anfangszeitpunkt des Wetterwechsels ermitteln. Zusätzlich oder alternativ kann das dritte Analyseprogramm die Gebäudereaktionszeit auch in Abhängigkeit der Wetterdaten, des passiven Wärmeflusses, der Soll-Vorlauftemperatur und/oder der Ist-Vorlauftemperatur ermitteln.

Weiterhin ist es von Vorteil, wenn das dritte Analyseprogramm zur Ermittlung der Gebäudereaktion einen ersten Zeitpunkt, ab dem sich die Raumtemperatur ändert, und einen zweiten Zeitpunkt, ab dem die Änderung der Raumtemperatur endet, ermittelt. Zusätzlich oder alternativ kann auch dem ersten und dem zweiten Zeitpunkt eine Temperaturdifferenz ermittelt werden. Die Temperaturdifferenz kann nun positiv oder negativ sein, so dass daraus die Gebäudereaktion abgeleitet werden kann.

Vorteilhafterweise kann das Steuergerät zur Ermittlung der Gebäudereaktion die Ist-Vorlauftemperatur, insbesondere bei einer bekannten Temperatur, konstant halten. Kühlt sich das Gebäude dabei ab, kann darauf geschlossen werden, dass die zur Ist-Vorlauftemperatur korrespondierende Heizleistung nicht ausreicht, um die Wärmeverluste auszugleichen.

Alternativ kann die Ist-Vorlauftemperatur zur Ermittlung der Gebäudereaktion geändert werden. Die Ist-Vorlauftemperatur kann beispielsweise erhöht werden. Gemäß der Erwärmung kann auch die Gebäudereaktion geschlossen werden.

Die drei genannten Analyseprogramme können auch in einem einzigen Analyseprogramm zusammengefasst sein, das somit mehrere Funktionen, insbesondere die der einzelnen Analyseprogramme, aufweist.

Außerdem ist es von Vorteil, wenn das Steuergerät und/oder die gebäudeexterne Steuereinheit derart ausgebildet ist, dass diese eine Energieproduktion einer Energieerzeugungseinheit aufzeichnen kann. Zusätzlich oder alternativ kann das Steuergerät und/oder die gebäudeexterne Steuereinheit auch eine Netzstromaufnahme aufzeichnen. Die Energieerzeugungseinheit kann beispielsweise eine Photovoltaikanlage, eine Windanlage und/oder eine Kraft-Wärme-Maschine umfassen, die dem Gebäude zugeordnet ist und für das Gebäude Energie erzeugt. Die Energieerzeugungseinheit kann am Gebäude und/oder in der Umgebung des Gebäudes angeordnet sein. Die Energieerzeugungseinheit kann aber auch ein Windpark oder ein Photovoltaik-Freiflächenanlage sein, die nicht einem einzigen Gebäude zugeordnet ist, sondern eine Leistung aufweist, dass eine Vielzahl an Gebäude mit Energie versorgt werden kann. Eine derartige Leistung kann mehrere Megawatt bis mehrere zehn Megawatt betragen. Bei der Energie kann es sich vorteilhafterweise um elektrische Energie handeln, die auf einfache Weise, beispielsweise in einer Wärmepumpe, mittels eines Heizstabes und/oder mittels Heizpanelen der Gebäudeheizung in Wärme umgesetzt werden kann. Das Steuergerät kann dabei in Abhängigkeit der Energieproduktion und/oder der Netzstromaufnahme den Energieverbrauch steuern, um vorteilhafterweise zuerst die Energie zu verbrauchen, die durch die Energieproduktionseinheit entstanden ist. Das Steuergerät kann eine überschüssige Energie, die nicht zum Heizen des Gebäudes benötigt wird, in einem Pufferspeicher der Gebäudeheizung für einen späteren Zeitpunkt zum Heizen speichern.

Ferner kann das Steuergerät anhand der prognostizierten Wetterdaten die Energieproduktion vorausberechnen. Ist am Gebäude beispielsweise eine Photovoltaikanlage vorhanden und die prognostizierten Wetterdaten sagen einen Tag mit viel Sonnenschein voraus, wird viel Energie bereitstehen, die zum Heizen verwendet werden kann. Zusätzlich oder alternativ kann auch die gebäudeexterne Steuereinheit anhand der prognostizierten Wetterdaten die Energieproduktion vorausberechnen. Diese in der Zukunft zur Verfügung stehende Energie kann zum Heizen verwendet werden. Insbesondere kann ein Zeitplan für das Heizen durch den Algorithmus auf einen Zeitpunkt verschoben werden, wenn die Energie durch die Energieerzeugungseinheit bereitsteht. Dadurch kann der Anteil der Energie, die aus dem Stromnetz aufgenommen werden muss, verringert werden.

Außerdem ermittelt das Steuergerät mit einem Regelsystem einen Zeitpunkt für die Umwandlung von Energie in Wärme anhand der Wetterdaten. Das Steuergerät kann den Zeitpunkt zusätzlich oder alternativ auch anhand der Wärmekapazität des Gebäudes ermitteln. Zusätzlich oder alternativ kann auch die gebäudeexterne Steuereinheit das Regelsystem aufweisen, um den Zeitpunkt für die Umwandlung von Energie in Wärme anhand der Wetterdaten zu ermitteln. Die Energie kann beispielsweise die sein, die von der Energieerzeugungseinheit erzeugt wird. Dadurch kann beispielsweise anhand der Wetterprognose ermittelt werden, zu welchem Zeitpunkt eine hohe Energie, beispielsweise bei Sonnenschein durch die Photovoltaikanlage, zur Verfügung steht. Das Steuergerät kann beispielsweise die Umwandlung der Energie in Wärme verzögern, um die durch die Wetterprognose vorausberechnete Energieproduktion ausnutzen zu können. Sagen die Wetterprognosen beispielsweise Sonnenschein für Nachmittagsstunden voraus und das Gebäude soll für Abendstunden auf 23°C erwärmt werden, kann das Steuergerät das Aufheizen bis in die Nachmittagsstunden verzögern, wenn durch die Photovoltaikanlage selbsterzeugte Energie zur Verfügung steht. Dadurch muss weniger Energie aus dem Stromnetz aufgenommen werden, so dass Kosten reduziert werden können.

Das Steuergerät kann dann anhand des Zeitpunktes die Gebäudeheizung mit der erzeugten Energie versorgen. Zusätzlich oder alternativ kann das Steuergerät bei ungenutzter, von der Energieerzeugungseinheit erzeugter, Energie einen Warmwasserspeicher und/oder Pufferspeicher versorgen. Die Energie kann im Warmwasserspeicher und/oder Pufferspeicher gespeichert werden.

Des Weiteren ist es von Vorteil, wenn das Steuergerät derart ausgebildet ist, dass dieses die Gebäudeheizung des Gebäudes in Abhängigkeit der ermittelten Wärmekapazität des Gebäudes und/oder der prognostizierten Wetterdaten derart steuert, dass primär ein vom Gebäude selbst, insbesondere über eine Photovoltaikanlage und/oder eine Windenergieanlage, erzeugter Eigenstrom und sekundär ein zugekaufter Netzstrom verbraucht wird. Dadurch können Energiekosten eingespart werden.

Vorteilhaft ist es, wenn das Energiemanagementsystem eine Vielzahl an Steuergeräten umfasst, die jeweils in einem Gebäude eines Gebäudeverbunds angeordnet sind. Der Gebäudeverbund kann ein oder Teil eines Microgrid(s) sein. Ein Microgrid ist ein örtliches Netz aus Strom- /Wärmeerzeugern und den Verbrauchern, den Gebäuden. Die Strom- /Wärmeerzeuger können beispielsweise Müllverbrennungsanlagen, Kohlkraftanlagen, Großwärmepumpen und/oder Gasturbinenanlagen umfassen. Ein Microgrid kann dabei autark betrieben werden, d.h. die Energieerzeuger erzeugen die Energie für die Verbraucher. Das Microgrid kann beispielsweise einige zehn Gebäude und einen Energieerzeuger oder einige hundert Gebäude und mehrere Energieerzeuger umfassen. Im Microgrid kann die von den Energieerzeugern erzeugte Energie über ein Fernwärmenetz zu den Verbrauchen bzw. den Gebäuden transportiert werden. Das Fernwärmenetz kann beispielsweise ein Leitungssystem umfassen, das heißes Wasser zu den Gebäuden liefert. An den Gebäuden kann eine Übergabestation angeordnet sein, die die Energie aus dem Fernwärmenetz aufnimmt und in das Gebäude einleitet. Die Übergabestation kann einen Wärmetauscher aufweisen, der die Energie vom Fernwärmenetz in das im Gebäude angeordnete Heizsystem überträgt.

Das Fernwärmenetz kann zur Energiespeicherung einen Pufferspeicher aufweisen. Der Pufferspeicher kann auch das Leitungssystem sein, da in dem im Leitungssystem angeordnete heiße Wasser ebenfalls Energie aufnehmen kann.

Wie bereits oben beschrieben ist, kann in jedem Gebäude ein Steuergerät angeordnet sein. Jedes Steuergerät kann von dem zugeordneten Gebäude die Gebäudedaten abrufen, wie beispielsweise die Raumtemperatur, den Raumtemperaturverlauf, die Ist-Vorlauftemperatur und/oder die Soll-Vorlauftemperatur einer Heizanlage im Gebäude. Jedes Steuergerät kann den Algorithmus aufweisen, mit dem in Abhängigkeit der prognostizierten Wetterdaten die Soll-Vorlauftemperatur ermittelt werden kann. Die Steuergeräte steuern somit jeweils ihre zugeordneten Gebäudeheizungen. Beispielsweise steuern die Steuergeräte die gebäudeinternen Heizanlagen und/oder die Wärmeaufnahme aus dem Fernwärmenetz. Dazu kann jedem Gebäude in Abhängigkeit des Gebäudestandorts die prognostizierten und/oder tatsächlichen Wetterdaten übermittelt werden.

Jedes Steuergerät kann mit der übergeordneten gebäudeexternen Steuereinheit über die gebäudeexterne Schnittstelle der Steuergeräte eine Verbindung aufbauen, über die Daten ausgetauscht werden können. Die Steuergeräte können dadurch der gebäudeexternen Steuereinheit die Gebäudedaten, wie Wärmekapazität, Gebäudedämmung Raumtemperatur, Raumtemperaturverläufe, Größe der Fensterflächen und/oder Ausrichtung des Gebäudes etc. mitteilen. Die gebäudeexterne Steuereinheit kann die prognostizierten und/oder tatsächlichen Wetterdaten erhalten und über die gebäudeexterne Schnittstelle den Steuergeräten übermitteln. Die gebäudeexterne Steuereinheit kann auch den Algorithmus aufweisen, mit dem in Abhängigkeit von zumindest den prognostizierten Wetterdaten die Soll-Vorlauftemperatur der Gebäudeheizung ermittelt. Die gebäudeexterne Steuereinheit kann dabei für jedes Gebäude einzeln die Soll-Vorlauftemperatur ermitteln und an das entsprechende Steuergerät im Gebäude übermitteln. Das Steuergerät regelt daraufhin die Soll-Vorlauftemperatur der Gebäudeheizung für das entsprechende Gebäude. Vorteilhafterweise kann die gebäudeexterne Steuereinheit eine internetbasierte Softwareplattform umfassen, so dass die Steuergeräte der jeweiligen Gebäude dezentral gesteuert werden können.

Aus den übertragenen Gebäudedaten kann die gebäudeexterne Steuereinheit auch Rückschlüsse auf insbesondere dazu verschiedene Gebäudedaten ziehen. Beispielsweise kann die gebäudeexterne Steuereinheit aus den Raumtemperaturverläufen und aus der Ist-Vorlauftemperatur auf die Größe der Fensterflächen des Gebäudes und auf die Ausrichtung des Gebäudes ziehen. Ist die Ist-Vorlauftemperatur gering eingestellt und steigt die Raumtemperatur trotzdem über die Ist-Vorlauftemperatur kann darauf geschlossen werden, dass zusätzliche Wärmeenergie in den Raum bzw. das Gebäude geflossen ist. Die gebäudeexterne Steuereinheit kann diesen Raumtemperaturverlauf mit den prognostizierten Wetterdaten vergleichen. Wenn die Wetterdaten beispielsweise Sonnenschein zu dem Zeitpunkt voraussagen bzw. vorausgesagt haben, als die Raumtemperatur über die Ist-Vorlauftemperatur gestiegen ist, kann die gebäudeexterne Steuereinheit auf die Größe der Fensterflächen und/oder auf die Ausrichtung des Gebäudes schließen.

Steigt die Raumtemperatur über die Ist-Vorlauftemperatur wenn dagegen keine Sonne scheint, kann darauf geschlossen werden, dass im Gebäude bzw. im Raum eine Wärmequelle angeordnet ist. Steigt die Raumtemperatur beispielsweise schnell an und fällt nach Erreichen einer maximalen Raumtemperatur nur langsam ab, kann die gebäudeexterne Steuereinheit daraus schließen, dass das Gebäude beispielsweise mit einem Kachelofen geheizt wurde. Mit dem Kachelofen kann verhältnismäßig schnell das Gebäude bzw. der Raum aufgeheizt werden. Der Kachelofen gibt danach die Wärmeenergie langsam ab, so dass die Raumtemperatur nur langsam abfällt.

Die hier beschriebenen Rückschlüsse auf die Größe der Fensterflächen, der Ausrichtung des Gebäudes und/oder ob eine Wärmequelle im Gebäude bzw. im Raum angeordnet ist, kann zusätzlich oder alternativ auch das Steuergerät ziehen. Die Rückschlüsse können vom Steuergerät und/oder von der gebäudeexternen Steuereinheit beispielsweise mit einem eigenen Analyseprogramm gezogen werden. Die Rückschlüsse können dann von dem Steuergerät an die gebäudeexterne Steuereinheit übermittelt werden.

Weiterhin ist das Energiemanagementsystem derart ausgebildet, dass überschüssige Energie in einem Pufferspeicher der Gebäudeheizung, mit Hilfe der Wärmekapazität des oder der Gebäude und/oder in einem Fernwärmenetz zwischengespeichert werden kann. Die überschüssige Energie kann beispielsweise an einem sonnigen Tag vorhanden sein, wenn mittels der Photovoltaikanlage bzw. der Photovoltaik-Freiflächenanlage mehr Energie zur Verfügung steht, als verbraucht werden kann. Die überschüssige Energie kann dabei auch in der Gebäudeheizung zwischengespeichert werden. Dazu kann das im Heizkreislauf der Gebäudeheizung zirkulierende Heizmedium, beispielsweise Wasser, erwärmt werden. Insbesondere kann die überschüssige Energie in Form von Wärme in der Wärmekapazität des und/oder der Gebäude zwischengespeichert werden. Die Steuergeräte der Gebäude können dazu beispielsweise der gebäudeexternen Steuereinheit mitteilen, wieviel Energie mit Hilfe der Wärmekapazität des Gebäudes zwischengespeichert werden kann. Die Steuergeräte können der gebäudeexternen Steuereinheit die Kapazitätszustände der Gebäude mitteilen. Steht die überschüssige Energie zur Verfügung, kann die Raumtemperatur bzw. die Gebäudetemperatur bis zu einem bestimmen Betrag über die Soll-Temperatur eingestellt werden. Der Betrag kann beispielsweise 1 bis zu 2°C betragen, wobei die Bewohner des Gebäudes dies noch nicht als Fehlfunktion der Gebäudeheizung oder als unangenehm empfinden müssen. Das Gebäude kann somit zur Speicherung der überschüssigen Energie überheizt werden. Von dieser überschüssigen im Gebäude gespeicherten Energie kann dann profitiert werden, wenn die Photovoltaikanlage keine Energie, beispielsweise bei Nacht, mehr liefert. Durch die im Gebäude gespeicherte Energie kann das zusätzliche Heizen mittels der Gebäudeheizung verzögert werden, so dass Heizkosten eingespart werden.

Des Weiteren wird ein Arbeitsverfahren für ein Energiemanagementsystem zum vorausschauenden Ermitteln und Regeln einer Vorlauftemperatur einer Gebäudeheizung zumindest eines Gebäudes vorgeschlagen. Die Vorlauftemperatur kann beispielsweise die Temperatur sein, mit der Heizkörper im Gebäude versorgt werden, so dass das Gebäude geheizt werden kann.

Erfindungsgemäß wird das Arbeitsverfahren mit dem Energiemanagementsystem durchgeführt, das zumindest ein Merkmal der vorangegangenen und/oder nachfolgenden Beschreibung aufweist.

Das Arbeitsverfahren kann beispielsweise durch das oben genannte Steuergerät durchgeführt werden, welches in einem Gebäude angeordnet und diesem zugeordnet ist. Zusätzlich oder alternativ kann das Arbeitsverfahren auch von der oben beschriebenen gebäudeexternen Steuereinheit durchgeführt werden. Das Arbeitsverfahren kann den oben beschriebenen Algorithmus benutzen, der in Abhängigkeit von zumindest den prognostizierten Wetterdaten die Soll-Vorlauftemperatur ermittelt und/oder voraus berechnet.

Das Arbeitsverfahren kann zusätzlich oder alternativ auch das Analyseprogramm verwenden, um beispielsweise die Wärmekapazität des Gebäudes, den passiven Wärmefluss in das Gebäude hinein oder aus diesem hinaus, um die Energieproduktion der Energieerzeugungseinheit und/oder um den Raumtemperaturverlauf, die Raumreaktionszeit und/oder die Gebäudereaktion zu berechnen.

Vorgeschlagen wird ferner ein Steuergerät zur Verwendung in einem Energiemanagementsystem, das nach zumindest einem Merkmal der vorangegangenen und/oder nachfolgenden Beschreibung ausgebildet ist. Zusätzlich oder alternativ kann das Steuergerät auch in einem Arbeitsverfahren verwendet werden, das nach zumindest einem Merkmal der vorangegangenen und/oder nachfolgenden Beschreibung ausgebildet ist.

Auch wenn in der vorangegangenen und/oder nachfolgenden Beschreibung das Verfahren und/oder die Funktionsweise des Steuergeräts oder der gebäudeexternen Steuereinheit derart beschrieben ist, dass sie selbst beispielsweise die Wärmekapazität oder die Wettereinflüsse berechnen, so ist es selbstverständlich so, dass das Steuergerät und/oder die gebäudeexterne Steuereinheit auf den Algorithmus, auf eines der Analyseprogramme und/oder auf das Regelsystem zugreifen kann.

Weitere Vorteile der Erfindung sind in dem nachfolgenden Ausführungsbeispiel beschrieben. Es zeigen:
- **Figur 1**: eine schematische Ansicht eines Gebäudes mit einem Steuergerät,
- **Figur 2**: eine schematische Ansicht eines Gebäudeverbunds, mit einer zweiten Gebäudeheizung als Fernwärmenetz und einer gebäudeexternen Steuereinheit,
- **Figur 3**: ein Zeit-Temperatur-Diagramm eines Heizvorgangs eines Gebäudes und
- **Figur 4**: ein Zeit-Temperatur-Leistung-Diagramm eines Heizvorgangs eines Gebäudes.

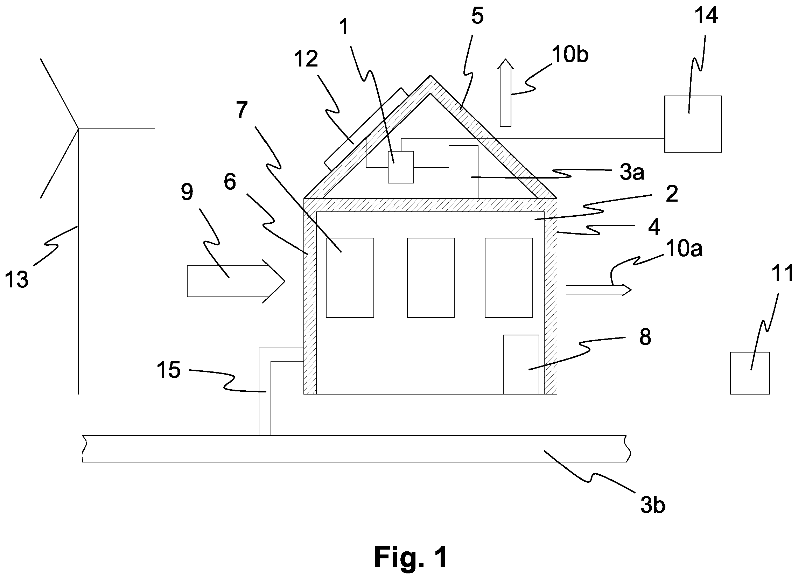

Figur 1 zeigt eine schematische Ansicht eines Gebäudes 2 mit einem Steuergerät 1. Das Steuergerät 1 ist Teil eines Energiemanagementsystems zum vorausschauenden Ermitteln und Regeln einer Vorlauftemperatur einer Gebäudeheizung 3a, 3b. Das Steuergerät 1 weist zumindest eine hier nicht gezeigte gebäudeinterne Schnittstelle auf, über die das Steuergerät 1 eine Raumtemperatur zumindest eines Gebäuderaums empfangen kann. Des Weiteren kann das Steuergerät 1 prognostizierte Wetterdaten über eine Eingangsschnittstelle empfangen. Die prognostizierten Wetterdaten können zusätzlich oder alternativ auch über die gebäudeinterne Schnittstelle vom Steuergerät 1 empfangen werden.

Das Steuergerät 1 kann ferner mittels der gebäudeinternen Schnittstelle eine Verbindung zu einer Gebäudeheizung 3a, 3b aufbauen. Über die gebäudeinterne Schnittstelle kann das Steuergerät 1 zum Regeln einer Vorlauftemperatur eine Soll-Vorlauftemperatur an die Gebäudeheizung 3a, 3b übermitteln. Ferner kann das Steuergerät 1 eine Ist-Vorlauftemperatur von der Gebäudeheizung 3a, 3b empfangen.

Gemäß dem vorliegenden Ausführungsbeispiel ist die Gebäudeheizung 3a eine Heizanlage im Gebäude 2 und kann beispielsweise eine Wärmepumpe umfassen. Die Gebäudeheizung 3a kann ferner über einen Wasserkreislauf und über Heizkörper zumindest einem Gebäuderaum eine Heizleistung zuführen. Das von der Gebäudeheizung 3a abgehende Wasser weist eine Vorlauftemperatur auf. Das zur Gebäudeheizung 3a zurückführende Wasser weist eine Rücklauftemperatur auf. Mittels der Differenz ist der zumindest eine Gebäuderaum geheizt.

Das Gebäude 2 kann zusätzlich oder alternativ auch von einer Gebäudeheizung 3b beheizt werden, welche im vorliegenden Ausführungsbeispiel als ein Fernwärmenetz ausgebildet ist. Die Heizleistung kann mittels einer Anschlussleitung 15 des Fernwärmenetzes ins Gebäude 2 eingeführt werden.

Das Fernwärmenetz kann dabei die Heizleistung mittels einer Übergabestation an den Heizkreislauf mit den Heizkörpern im Gebäude 2 übergeben.

Das Steuergerät 1 weist einen Algorithmus auf, mit dem die Soll-Vorlauftemperatur der Gebäudeheizung 3a, 3b in Abhängigkeit von zumindest prognostizierten Wetterdaten vorausschauend ermittelt und geregelt werden kann. Dadurch kann beispielsweise die vorhersehbare Abkühlung in der Nacht vorausschauend berücksichtigt werden. Die Abkühlung kann auch anhand der prognostizierten Wetterdaten abgelesen werden, wenn ein Temperatursturz prognostiziert wird. Soll beispielsweise die Raumtemperatur in einem Gebäuderaum konstant gehalten werden, kann die Soll-Vorlauftemperatur vorausschauend vor oder während der Dämmerung erhöht werden, um der Abkühlung in der Nacht entgegenwirken zu können.

Der Algorithmus kann zusätzlich oder alternativ auch in einer gebäudeexternen Steuereinheit 14 angeordnet und ausgeführt werden. Die gebäudeexterne Steuereinheit 14 kann mittels einer hier nicht gezeigten gebäudeexternen Schnittstelle des Steuergeräts 1 mit dieser eine Verbindung aufbauen, so dass die gebäudeexterne Steuereinheit 14 und das Steuergerät 1 Daten austauschen können. Das Steuergerät 1 kann beispielsweise die Raumtemperatur und Raumtemperaturverläufe,, die im Gebäude 2 eingebaute Heizleistung der Gebäudeheizung 3a an die gebäudeexterne Steuereinheit 14 übermitteln. Die gebäudeexterne Steuereinheit 14 kann beispielsweise prognostizierte und/oder tatsächliche Wetterdaten an das Steuergerät 1 übermitteln. Außerdem kann die gebäudeexterne Steuereinheit 14 auch dem Steuergerät 1 mitteilen, welche Soll-Vorlauftemperatur das Steuergerät 1 an der Gebäudeheizung 3a einstellen soll.

Das Steuergerät 1 kann des Weiteren ein erstes Analyseprogramm aufweisen, mit dem eine Wärmekapazität des Gebäudes 2 ermittelbar ist. Zusätzlich oder alternativ kann auch die gebäudeexterne Steuereinheit 14 das erste Analyseprogramm aufweisen, mit dem die Wärmekapazität des Gebäudes 2 ermittelt werden kann. Es kann auch nur eine Wärmekapazität für zumindest einen Gebäuderaum ermittelt werden. Die Wärmekapazität ist beispielsweise eine spezifische Wärmespeicherfähigkeit des Gebäudes 2. Das Gebäude 2 umfasst zumindest eine Wand 4 sowie ein Dach 5, die zur Wärmekapazität des Gebäudes 2 beitragen. Ferner weist die Wand 4 und/oder das Dach 5 eine Gebäudedämmung 6 auf, die ebenfalls zur Wärmekapazität beiträgt. Beispielsweise ist die Wärmekapazität des Gebäudes 2 erhöht, wenn die Wände 4 und/oder das Dach 5 dicker sind. Dadurch können die Wände 4 und/oder das Dach 5 mehr Wärmeenergie speichern.

Mit Hilfe der Dämmung 6 kann ferner die Wärmeenergie im Gebäude 2 gehalten werden, so dass beispielsweise im Winter das Gebäude 2 langsamer auskühlt. Alternativ kann im Sommer die Wärmeenergie außerhalb des Gebäudes 2 gehalten werden. Im Sommer kann es vorteilhaft sein, wenn das Gebäude 2 kühler ist als die Umgebung des Gebäudes 2.

Die Wärmekapazität des Gebäudes 2 hat somit Auswirkungen darauf, wie das Gebäude 2 geheizt werden muss, um beispielsweise zu einem bestimmten Zeitpunkt eine bestimmte Temperatur zu erreichen. Weist das Gebäude 2 eine hohe Wärmekapazität auf, reagiert es langsam auf eine Temperaturänderung infolge einer Änderung der Wetterlage. Zusätzlich oder alternativ reagiert das Gebäude 2 auch langsam auf eine Änderung der Heizleistung durch die Gebäudeheizung 3a, 3b. Die Wärmekapazität kann damit vorteilhafterweise beim Beheizen des Gebäudes 2 berücksichtigt werden.

Um die Heizleistung der Gebäudeheizung 3a, 3b zu regeln, kann der Algorithmus in Abhängigkeit zumindest der prognostizierten Wetterdaten und der vom ersten Analyseprogramm ermittelten Wärmekapazität die Soll-Vorlauftemperatur bestimmen. Soll beispielsweise abends in zumindest einem Gebäuderaum eine Raumtemperatur von 23°C erreicht sein, kann der Algorithmus in Abhängigkeit der Wärmekapazität die Soll-Vorlauftemperatur einstellen. Weist der Gebäuderaum mittags nur eine Temperatur von 18°C auf, was mit Hilfe eines im Gebäuderaum angeordneten Temperaturfühlers gemessen werden kann, und das Gebäude 2 weist eine hohe Wärmekapazität auf, wird das Gebäude 2 nur langsam auf eine in den Gebäuderaum geführte Heizleistung reagieren. Um trotzdem abends die 23°C zu erreichen, kann der Algorithmus die Soll-Vorlauftemperatur entsprechend hoch einstellen. Der Algorithmus kann aber auch einen Beginn der Heizphase früher ansetzen, um den Gebäuderaum zu erwärmen.

Mit Hilfe eines dritten Analyseprogramms kann auch ein Raumtemperaturverlauf für den Gebäuderaum ermittelt werden. Der Raumtemperaturverlauf zeigt die Raumtemperatur in Abhängigkeit der Zeit an. Mit Hilfe des Raumtemperaturverlaufs kann entschieden werden, ob mit der gegenwärtigen Heizleistung eine bestimmte Raumtemperatur zu einer bestimmten Zeit erreichbar ist.

Der Algorithmus kann auch die prognostizierten Wetterdaten zur Ermittlung und Regelung der Soll-Vorlauftemperatur mit berücksichtigen. Beispielsweise wird das Aufheizen des Gebäuderaums schneller erfolgen, wenn eine Außentemperatur 15°C statt 0°C beträgt.

Die Heizleistung kann auch vom Algorithmus und/oder einem Analyseprogramm berechnet werden, wenn beispielsweise die Rücklauftemperatur gemessen wird und ebenfalls über die Eingangsschnittstelle an das Steuergerät 1 und/oder die gebäudeexterne Steuereinheit 14 übermittelt wird. Aus der Differenz der Vorlauf- und Rücklauftemperatur sowie beispielsweise einer Wassermenge, die in einer Heizzeit zu einem Heizkörper im Gebäuderaum geführt wurde, kann die Heizleistung berechnet werden.

Des Weiteren kann der Algorithmus in Abhängigkeit der ermittelten Wärmekapazität des Gebäudes 2 die Soll-Vorlauftemperatur bestimmen. Aus der zugeführten Heizleistung und der Wärmekapazität kann auf einfache Weise ermittelt werden, um welche Temperatur sich der zumindest eine Gebäuderaum während einer Heizzeit erwärmt.

Anhand der prognostizierten Wetterdaten kann der Algorithmus auch die Soll-Vorlauftemperatur bestimmen. Werden dem Steuergerät 1 über die Eingangsschnittstelle prognostizierte Wetterdaten übermittelt, die einen Tag mit Sonnenschein voraussagen, kann ein passiver Wärmefluss derart ausgebildet sein, so dass eine Wärmemenge ins Gebäude 2 fließt und ebenfalls zur Heizleistung des zumindest einen Gebäuderaums beiträgt. Die Sonnenstrahlung kann dabei durch Fenster 7 (es ist der Einfachheit halber nur ein Fenster 7 mit einem Bezugszeichen versehen) in das Gebäude 2 und den zumindest einen Gebäuderaum eintreten und diesen und das Gebäude 2 erwärmen. Es kann aber auch eine Wärmemenge in das Gebäude 2 und den Gebäuderaum einfließen, wenn die Außentemperatur über der Raumtemperatur liegt. Es kann somit ein Wärmeeintrag 9 in das Gebäude 2 und den zumindest einen Gebäuderaum stattfinden. Der Wärmeeintrag 9 hängt beispielsweise von der Sonneneinstrahlung, der Außentemperatur, einem Niederschlag, einem Bewölkungsgrad und/oder von Windverhältnissen ab. Der passive Wärmefluss kann auch von einem zweiten Analyseprogramm ermittelt werden, welches im Steuergerät 1 und/oder in der gebäudeexternen Steuereinheit 14 ausgeführt wird.

Des Weiteren kann ein Wärmeverlust 10a, 10b stattfinden. Der Wärmeverlust 10a kann beispielsweise ein Verlust durch eine Undichtigkeit einer Tür 8 und/oder der Fenster 7 sein. Der Wärmeverlust 10b kann beispielsweise ein Verlust durch die Dämmung 6 sein.

Wenn der Wärmeeintrag 9 größer ist als der Wärmeverlust 10a, 10b, ist der passive Wärmefluss positiv. Es fließt somit mehr Wärmeenergie ins Gebäude 2, als aus diesem abfließt. Wenn dagegen der Wärmeverlust 10a, 10b größer ist als der Wärmeeintrag 9, ist der passive Wärmefluss negativ. Es fließt also mehr Wärmeenergie aus dem Gebäude 2 ab, als in das Gebäude 2 hineinfließt.

Der passive Wärmefluss hängt dabei von Gebäudeparametern und von der Wetterlage ab. Ein Gebäudeparameter ist beispielsweise die Fläche der Fenster 7. Größere Fenster 7 können mehr Sonnenstrahlung ins Gebäude 2 leiten, so dass der Wärmeeintrag 9 größer ist.

Das zweite Analyseprogramm kann somit anhand der prognostizierten Wetterdaten den passiven Wärmefluss ermitteln. Wenn beispielsweise der passive Wärmefluss positiv ist, kann das zweite Analyseprogramm dies zur Heizleistung der Gebäudeheizung 3a, 3b hinzurechnen und die Soll-Vorlauftemperatur entsprechend bestimmen.

Ferner kann das Steuergerät 1 tatsächliche Wetterdaten von einer in der Umgebung des Gebäudes 2 angeordneten Wetterstation 11 erhalten. Die tatsächlichen Wetterdaten können von der Wetterstation 11 über die Eingangsschnittstelle zum Steuergerät 1 gelangen. Die Wetterstation 11 kann beispielsweise die Außentemperatur, die Sonneneinstrahlung, die Niederschlagsmenge, die Niederschlagswahrscheinlichkeit, Bewölkungsgrad und/oder die Windstärke erfassen.

Das Gebäude 2 kann ferner beispielsweise auf dem Dach 5 eine Photovoltaikanlage 12 aufweisen. Mit Hilfe der Photovoltaikanlage 12 kann beispielsweise bei Sonnenschein elektrische Energie erzeugt werden. Ferner kann in der Umgebung des Gebäudes 2 eine Windanlage 13 angeordnet sein, mittels der ebenfalls elektrische Energie erzeugt werden kann.

Mittels der elektrischen Energie kann die Gebäudeheizung 3a, 3b betrieben werden. Zusätzlich oder alternativ kann die von der Photovoltaikanlage 12 erzeugte elektrische Energie auch in einem hier nicht gezeigten Pufferspeicher gespeichert werden. Der Pufferspeicher kann beispielsweise Akkumulatoren zur Speicherung der elektrischen Energie umfassen. Zusätzlich oder alternativ kann der Pufferspeicher auch Wärmeenergie speichern. Dazu kann der Pufferspeicher als Wassertank und/oder als Latentwärmespeicher ausgebildet sein.

Die tatsächlichen Wetterdaten können aber auch von einer Onlinewetterstation stammen und dem Steuergerät 1 über die Eingangsschnittstelle zugeführt werden.

Das Steuergerät 1 kann auch ein GPS-System umfassen, so dass das Steuergerät 1 seine eigene Position selbstständig bestimmen kann und die tatsächlichen Wetterdaten und/oder die prognostizierten Wetterdaten abfragen kann. Zusätzlich oder alternativ kann vom Benutzer auch die Postleitzahl in Steuergerät 1 eingegeben werden, so dass es die tatsächlichen und/oder prognostizierten Wetterdaten für die Umgebung abfragen kann.

Das Steuergerät 1 kann mit Hilfe der Wetterstation 11, der Onlinewetterstation und/oder der gebäudeexternen Steuereinheit 14 die Wetterprognose als Input erhalten.

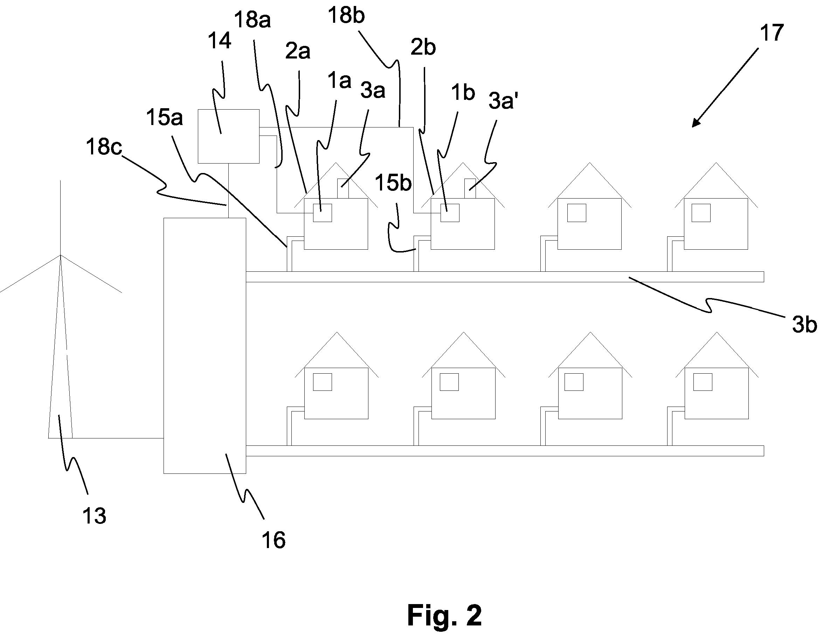

Figur 2 zeigt eine schematische Ansicht eines Energiemanagementsystems mit einer Vielzahl an Gebäuden 2, die zu einem Gebäudeverbund 17 zusammengefasst sind. Der Einfachheit halber sind in der Figur 2 lediglich zwei Gebäude 2a, 2b, zwei Steuergeräte 1a, 1b usw. mit einem Bezugszeichen versehen.

Gemäß dem vorliegenden Ausführungsbeispiel ist in jedem Gebäude 2a, 2b ein Steuergerät 1a, 1b angeordnet, die jeweils mit den in den Gebäuden 2a, 2b angeordneten Gebäudeheizungen 3a, 3a' verbunden sind. Die Steuergeräte 1a, 1b können von den jeweiligen Gebäudeheizungen 3a, 3a' die Ist-Vorlauftemperatur erhalten. Zusätzlich können die Steuergeräte 1a, 1b auch Raumtemperaturen der jeweiligen Gebäude 2a, 2b erhalten. Die Steuergeräte 1a, 1b können jeweils über gebäudeexterne Schnittstellen mit der gebäudeexternen Steuereinheit 14 eine Datenverbindung 18a, 18b aufbauen, um darüber Gebäudedaten austauschen zu können. Die gebäudeexterne Steuereinheit 14 kann den Steuergeräten 1a, 1b die prognostizierten und/oder tatsächlichen Wetterdaten der jeweiligen Standorte der Gebäude 2a, 2b übermitteln. Außerdem kann die gebäudeexterne Steuereinheit 14 mit dem Algorithmus die Soll-Vorlauftemperatur ermitteln und an die Steuergeräte 1a, 1b übermitteln. Daraufhin können die Steuergeräte 1a, 1b die Gebäudeheizungen 3a, 3a' entsprechend regeln, so dass die Soll-Vorlauftemperatur eingestellt wird.

Zusätzlich oder alternativ können die Gebäude 2a, 2b des Gebäudeverbunds 17 auch mittels einer zweiten Gebäudeheizung 3b beheizt werden. Gemäß dem vorliegenden Ausführungsbeispiel kann die zweite Gebäudeheizung 3b ein Fernwärmenetz sein. Das Fernwärmenetz ist an ein Heizkraftwerk 16 gekoppelt, das elektrische Energie und Wärme erzeugen kann. Im Allgemeinen wird die Wärme über in Leitungen zirkulierendes heißes Wasser, das ebenfalls eine Vorlauftemperatur aufweist, zu den Gebäuden 2a, 2b geführt. In jedes Gebäude 2a, 2b führt eine Anschlussleitung 15a, 15b, um die Wärmeenergie in die Gebäude 2a, 2b zu führen. Die Anschlussleitungen 15a, 15b können in hier nicht gezeigte Übergabestationen in den jeweiligen Gebäuden 2a, 2b führen, die beispielsweise mittels Wärmetauschern die Wärmeenergie in das Heizungssystem der Gebäude 2a, 2b leiten. Dort kann die Wärmeenergie mittels Heizkörper zum Heizen verwendet werden.

Die gebäudeexterne Steuereinheit 14 kann zum Heizkraftwerk 16 und/oder zur zweiten Gebäudeheizung 3b ebenfalls eine Datenverbindung 18c aufweisen. In der gebäudeexternen Steuereinheit 14 kann der Algorithmus die Soll-Vorlauftemperatur der zweiten Gebäudeheizung 3b, hier des Fernwärmenetzes, vorausschauend ermitteln. Die gebäudeexterne Steuereinheit 14 kann daraufhin dem Heizkraftwerk 16 die Soll-Vorlauftemperatur übermitteln, woraufhin das Heizkraftwerk 16 die Vorlauftemperatur anpassen kann. Das Heizkraftwerk 16 kann die Vorlauftemperatur beispielsweise absenken, wenn der Algorithmus aufgrund von prognostizierten Wetterdaten, die beispielsweise viel Sonnenschein beinhalten, die Soll-Vorlauftemperatur geringer ermittelt. Dadurch kann Energie im Heizkraftwerk 16 eingespart werden.

Die gebäudeexterne Steuereinheit 14 kann dem Heizkraftwerk 16 auch mitteilen, dass die Vorlauftemperatur im Fernwärmenetz erhöht werden soll, weil beispielsweise gerade überschüssige Energie vorhanden ist, die im Fernwärmenetz für einen späteren Zeitpunkt zwischengespeichert werden kann. Die überschüssige Energie kann beispielsweise von der Energieerzeugungseinheit 13 stammen, die das Heizkraftwerk 16 und/oder die zweite Gebäudeheizung 3b mit Energie versorgt.

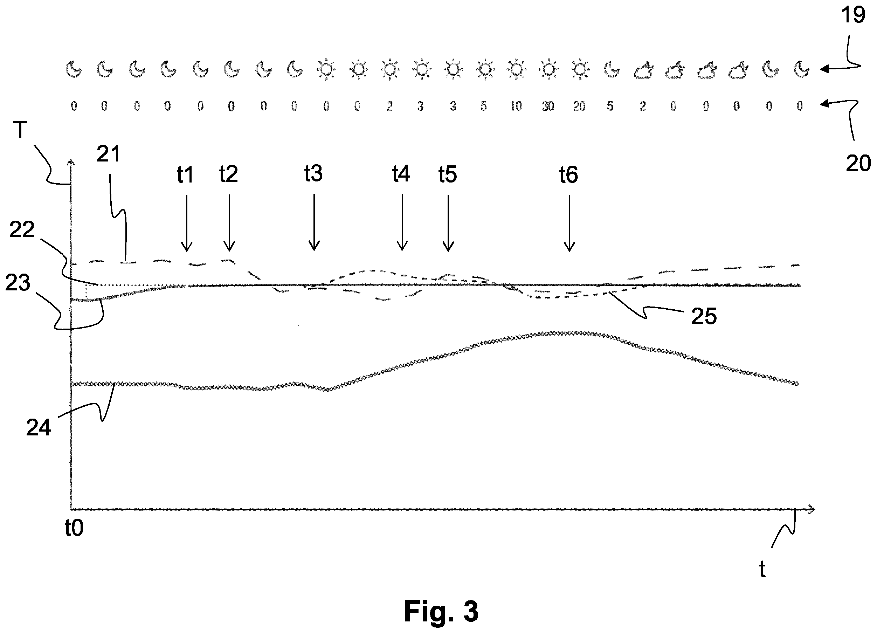

Figur 3 zeigt ein Diagramm, bei dem die Temperatur T über die Zeit t aufgetragen ist. Das Diagramm kann beispielsweise die Temperatur T eines vollen Tages anzeigen. Das Diagramm zeigt außerdem eine Bewölkung 19 und einen Wind 20 an. Der Wind 20 kann beispielsweise in Kilometer pro Stunde oder Meter pro Sekunde angegeben sein.

Das Diagramm zeigt ferner eine Vorlauftemperatur 21, wie sie beispielsweise vom Algorithmus für den vollen Tag vorausberechnet wurde. Der Algorithmus kann die Vorlauftemperatur 21 auch kontinuierlich für beispielsweise die nächsten 6 Stunden vorausberechnen.

Außerdem zeigt das Diagramm eine Soll-Temperatur 22, wie sie beispielsweise ein Bewohner des Gebäudes 2 in einem Raum eingestellt hat. Die Soll-Vorlauftemperatur ist im vorliegenden Ausführungsbeispiel konstant bei beispielsweise 23° C.

Im Diagramm sind auch die Ist-Temperatur 23 und eine Außentemperatur 24 gezeigt.

Das Diagramm beginnt bei einem Zeitpunkt t0. Zu diesem Zeitpunkt t0 liegt die Ist-Temperatur 23 unter der Soll-Temperatur 22. Die Vorlauftemperatur 21 der Gebäudeheizung 3 ist höher als die Soll-Temperatur 22, so dass das Gebäude 2 oder ein Raum aufgeheizt wird. Bis zum Zeitpunkt t1 steigt die Ist-Temperatur 23 bis die Soll-Temperatur 22 erreicht ist.

Während des Zeitintervalls t0 - t1 kann anhand der Änderung der Ist-Temperatur 23 beispielsweise die Wärmekapazität des Gebäudes 2 oder zumindest eines Raumes ermittelt werden. Durch die bekannte Vorlauftemperatur 21 kann das Analyseprogramm im Steuergerät 1 und/oder in der gebäudeexternen Steuereinheit 14 die dem Raum oder dem Gebäude 2 zugeführte Energie berechnen. Die Energie im Zeitintervall t0 - t1 ergibt die Heizleistung. Diese Heizleistung und die Temperaturdifferenz der Ist-Temperatur 23 zum Zeitpunkt t0 und t1 ergibt die Wärmekapazität.

Im Zeitintervall t0 - t1 kann somit die Wärmekapazität und die Zeit berechnet werden, wann zu heizen begonnen werden muss, um zu einem bestimmten Zeitpunkt t eine Ist-Temperatur 23 zu erreichen. Diese Vorlaufzeit hängt natürlich von der Wärmekapazität ab.

Dem Steuergerät 1 und/oder der gebäudeexternen Steuereinheit 14 können über eine Eingangsschnittstelle die prognostizierten Wetterdaten übermittelt werden. Im vorliegenden Beispiel sind die Wetterdaten die gezeigte Bewölkung 19 und der gezeigte Wind 20 über der Zeit t. Beispielsweise ist ab dem Zeitpunkt t3 mit Sonnenschein zu rechnen. Ab dem Zeitpunkt t4 beginnt beispielsweise Wind 20 einzusetzen, der ungefähr zum Zeitpunkt t5 sein Maximum erreicht.

Zum Zeitpunkt t2 kann die Vorlauftemperatur 21 abgesenkt werden, da der Algorithmus die ab dem Zeitpunkt t3 einsetzende Sonneinstrahlung mit zur Heizleistung des Gebäudes 2 miteinberechnet. Dadurch kann die Ist-Temperatur 23 konstant gehalten werden, obwohl die Vorlauftemperatur 21 abgesenkt wird. Dadurch kann Heizenergie eingespart werden.

Ab dem Zeitpunkt t3 wird im vorliegenden Beispiel die Vorlauftemperatur 21 noch weiter abgesenkt, da sonst das Gebäude 2 eine fiktive Temperatur 25 aufweisen würde, die über der Soll-Temperatur 22 liegt.

Ab dem Zeitpunkt t4 kann der Algorithmus den Einfluss des einsetzendes Windes 20 miteinberechnen und die Vorlauftemperatur 21 wieder erhöhen. Ab dem Zeitpunkt t4 kann die zusätzliche Heizleistung der Sonneneinstrahlung den kühlenden Effekt des Windes nicht vollständig kompensieren, so dass der Algorithmus eine steigende Vorlauftemperatur 21 ermittelt.

Ab dem Zeitpunkt t5 kann der Algorithmus die Vorlauftemperatur 21 wieder absenken, da durch die steigende Außentemperatur 24 eine geringere Vorlauftemperatur 21 ausreicht, um die Ist-Temperatur 23 bei der Soll-Temperatur 22 konstant zu halten.

Ab dem Zeitpunkt t6, bei dem die Außentemperatur 24 wieder sinkt, da die Sonneneinstrahlung nachlässt, kann der Algorithmus die Vorlauftemperatur 21 wieder anheben, um die Ist-Vorlauftemperatur 23 konstant zu halten.

Der Algorithmus kann dieser Ermittlung und/oder Regelung der Vorlauftemperatur 21 anhand der prognostizierten Wetterdaten 19 vorausschauend berechnen. Beispielsweise kann der Algorithmus beim Zeitpunkt t1 bereits die Vorlauftemperatur für den Zeitpunkt t3 vorausberechnen, da die Wetterdaten für diesen Zeitpunkt t3 das Einsetzen von Sonnenschein voraussagen. Der Algorithmus kann auch den Wind 20 und/oder die Außentemperatur 24 berücksichtigen.

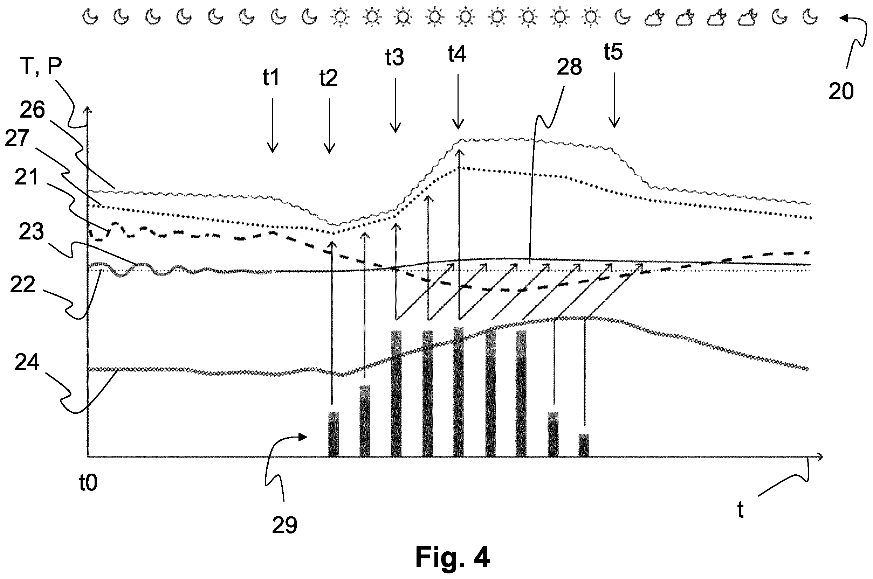

Figur 4 zeigt ein Diagramm, in dem die Temperatur T und eine Photovoltaikleistung P über die Zeit t aufgetragen ist. Das Diagramm zeigt die Vorlauftemperatur 21 einer Gebäudeheizung 3, eine Soll-Temperatur 22 eines Raums oder eines Gebäudes 2, eine Ist-Temperatur 23, eine Außentemperatur 24, eine Puffertemperatur 27 und eine Warmwassertemperatur 26. Die Warmwassertemperatur 26 kann beispielsweise eine Wassertemperatur für Sanitäranlagen sein.

Außerdem zeigt das Diagramm eine Energieproduktion einer Energieerzeugungseinheit 12, 13, wobei hier beispielsweise eine Ist-Photovoltaikleistung 29 der Photovoltaikanlage 12 gezeigt ist. Die Energieerzeugungseinheit kann aber auch eine Windkraftanlage und/oder eine Photovoltaik-Freiflächenanlage sein.

Zum Zeitpunkt t1 hat die Raumtemperatur 23 die Soll-Temperatur 22 erreicht. Zum Zeitpunkt t1 kann dem Algorithmus die prognostizierten Wetterdaten 20 vorliegen, die ab dem Zeitpunkt t2 Sonnenschein voraussagen. Anhand der Nennleistung der Photovoltaikanlage 12 kann der Algorithmus die Ist-Photovoltaikleistung 29 vorausschauend ermitteln. Gemäß dem vorliegenden Ausführungsbeispiel wird ab dem Zeitpunkt t2 eine hohe Ist-Photovoltaikleistung 29 zur Verfügung stehen.

Der Algorithmus kann ab dem Zeitpunkt t1 die Vorlauftemperatur 21 absenken, um Energie zu sparen. Das Steuergerät 1 und/oder die gebäudeexterne Steuereinheit 14 können mittels des Algorithmus die Heizleistung mittels der Vorlauftemperatur 21 absenken, da der Algorithmus ermittelt hat, dass ab dem Zeitpunkt t2 durch die Photovoltaikanlage 12 viel Energie zur Verfügung steht.

Ab dem Zeitpunkt t2 kann die Ist-Photovoltaikleistung 29 dazu verwendet werden, um eine Warmwassertemperatur 26 aufzuheizen. Gemäß dem vorliegenden Ausführungsbeispiel kann die Ist-Photovoltaikleistung 29 auch dazu verwendet werden, um eine Puffertemperatur 27 eines Pufferspeichers zu erhöhen, um darin ebenfalls Energie zu speichern.

Ab einem Zeitpunkt t3 kann zumindest ein Teil der Ist-Photovoltaikleistung 29 dazu verwendet werden, das Gebäude 2 oder einen Raum des Gebäudes 2 derart aufzuheizen, dass die Ist-Temperatur 23 über der Soll-Temperatur 22 liegt. Das Gebäude 2 oder der Raum weist infolgedessen eine Überladung 28 auf. Es hat sich herausgestellt, dass eine Raumtemperatur, die um einen geringen Betrag über der Soll-Temperatur liegt, nicht als unangenehm empfunden wird. Der Betrag kann beispielsweise 1,5° C betragen. Jedoch kann durch diese Überladung 28 des Gebäudes 2 oder des Raums eine Wärmeenergie im Gebäude 2 gespeichert werden. Das Gebäude 2 wird dann überladen, wenn viel Energie zur Verfügung steht, um Zeiträume zumindest teilweise überbrücken zu können, in denen weniger Energie zur Verfügung steht. Es kann somit eine Lastverschiebung durchgeführt werden. Die Wärmekapazität des Gebäudes 2 kann somit als Pufferspeicher benutzt werden. Die Energie zum Überladen des Gebäudes 2 und/oder des Pufferspeichers kann beispielsweise von der Energieerzeugungseinheit 12, 13 stammen. Zusätzlich oder alternativ kann das Gebäude 2 auch überladen werden, wenn am Strommarkt der Preis niedrig ist, so dass die geringen Kosten des Stroms zur Überladung 28 genutzt werden, um Phasen, bei denen der Strom teurer ist, überbrücken zu können.

Zum Zeitpunkt t4 wird beispielsweise die Warmwassertemperatur 26 und die Puffertemperatur 27 nicht weiter erhöht. Die Energie kann ab hier beispielsweise dazu benutzt werden, die Vorlauftemperatur 21 zu erhöhen.

Zum Zeitpunkt t5 sinkt die Warmwassertemperatur 26, weil beispielsweise in den Abendstunden die Sanitäranlagen häufiger benutzt werden.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

### Bezugszeichenliste

- 1: Steuergerät
- 2: Gebäude
- 3: Gebäudeheizung
- 4: Wand
- 5: Dach
- 6: Dämmung
- 7: Fenster
- 8: Tür
- 9: Wärmeeintrag
- 10: Wärmeverlust
- 11: Wetterstation
- 12: Photovoltaikanlage
- 13: Windanlage
- 14: gebäudeexterne Steuereinheit
- 15: Anschlussleitung
- 16: Heizkraftwerk
- 17: Gebäudeverbund
- 18: Datenverbindung
- 19: Bewölkung
- 20: Wind
- 21: Vorlauftemperatur
- 22: Soll-Temperatur
- 23: Ist-Temperatur
- 24: Außentemperatur
- 25: fiktive Temperatur
- 26: Warmwassertemperatur
- 27: Puffertemperatur
- 28: Überladung
- 29: Ist-Photovoltaikleistung
- t: Zeit
- T: Temperatur
- P: Photovoltaikleistung

## Patentansprüche

1. Energiemanagementsystem zum vorausschauenden Ermitteln und Regeln einer Vorlauftemperatur (21) einer Gebäudeheizung (3) zumindest eines Gebäudes (2) mit einem zum Anordnen in dem Gebäude (2) vorgesehenen Steuergerät (1), das eine gebäudeinterne Schnittstelle, über die das Steuergerät (1) bei vorgesehener Anwendung im Gebäude (2) eine Raumtemperatur zumindest eines Gebäuderaums empfangen kann und das bei vorgesehener Anwendung im Gebäude (2) mit der Gebäudeheizung (3) verbunden werden kann, über die das Steuergerät (1) zum Regeln der Vorlauftemperatur (21) eine Soll-Vorlauftemperatur der Gebäudeheizung (3) übermitteln und eine Ist-Vorlauftemperatur von der Gebäudeheizung (3) empfangen kann, und eine gebäudeexterne Schnittstelle aufweist, und mit einer gebäudeexternen Steuereinheit (14), die bei vorgesehener Anwendung über die gebäudeexterne Schnittstelle mit dem Steuergerät (1) zumindest zeitweise verbindbar ist, um Gebäudedaten vom Steuergerät (1) empfangen und/oder Steuerdaten an das Steuergerät (1) übermitteln zu können, wobei das Steuergerät (1) und/oder die gebäudeexterne Steuereinheit (14) einen Algorithmus aufweist, mittels dem in Abhängigkeit zumindest von prognostizierten Wetterdaten die Soll-Vorlauftemperatur der Gebäudeheizung (3) bestimmbar ist, **dadurch gekennzeichnet, dass** das Steuergerät (1) und/oder die gebäudeexterne Steuereinheit (14) ein erstes Analyseprogramm aufweist, mittels dem eine Wärmekapazität von Wänden (4), eines Dachs (5) und einer Gebäudedämmung (6) des Gebäudes (2) in einem iterativen Prozess ermittelbar ist,
dass das Energiemanagementsystem derart ausgebildet ist, dass bei überschüssiger Energie die Raumtemperatur bzw. die Gebäudetemperatur bis zu einem bestimmten Betrag über die Soll-Temperatur eingestellt werden kann, so dass das Gebäude (2) zur Speicherung der überschüssigen Energie überheizt werden kann,
dass das Steuergerät (1) und/oder die gebäudeexterne Steuereinheit (14) ein zweites Analyseprogramm aufweist, mittels dem ein passiver Wärmefluss in das Gebäude (2) hinein und aus dem Gebäude (2) heraus ermittelt werden kann,
dass das Steuergerät (1) derart ausgebildet ist, dass diese anhand der Wetterdaten die Energieproduktion einer Energieerzeugungseinheit (12, 13) berechnen kann,
dass das Steuergerät (1) und/oder die gebäudeexterne Steuereinheit (14) ein drittes Analyseprogramm aufweist, mittels dem eine Gebäudereaktion, ein Raumtemperaturverlauf und eine Raumreaktionszeit ermittelt werden kann, und
dass das Steuergerät (1) und/oder die gebäudeexterne Steuereinheit (14) ein Regelsystem aufweist, mit dem ein Zeitpunkt für die Umwandlung von Energie in Wärme anhand der Wetterdaten, des Gebäudetemperaturverlaufs, der Gebäudereaktionszeit, der Wärmekapazität des Gebäudes (2), der Energieproduktion und des passiven Wärmeflusses ermittelt und die Gebäudeheizung (3) entsprechend gesteuert werden kann.

2. Energiemanagementsystem nach dem vorherigen Anspruch, **dadurch gekennzeichnet, dass** die gebäudeexterne Steuereinheit (14) eine internetbasierte Softwareplattform ist.

3. Energiemanagementsystem nach einem der vorherigen Ansprüche, **dadurch gekennzeichnet, dass** die Gebäudeheizung (3) eine im Gebäude (2) angeordnete Heizanlage und/oder ein Fernwärmenetz umfasst und/oder dass die Gebäudeheizung (3) eine Wärmepumpe, einen Heizstab, einen Heizkessel, einen Pufferspeicher und/oder eine Klimaanlage umfasst.

4. Energiemanagementsystem nach einem der vorherigen Ansprüche, **dadurch gekennzeichnet, dass** das Steuergerät (1) und/oder die gebäudeexterne Steuereinheit (14) derart ausgebildet ist, dass diese über eine Eingangsschnittstelle die prognostizierten Wetterdaten, tatsächlichen Wetterdaten, eine Stromnetzstabilität, einen Strommarktpreis und/oder Temperaturen von einem Fernwärmenetz empfangen und/oder abspeichern kann.

5. Energiemanagementsystem nach einem der vorherigen Ansprüche, **dadurch gekennzeichnet, dass** das Energiemanagementsystem derart ausgebildet ist, dass dieses die Gebäudeheizung (3) und/oder einen Pufferspeicher, insbesondere die Gebäudekapazität des Gebäudes, mit der von der Energieerzeugungseinheit (12, 13) erzeugten Energie und/oder einer überschüssigen Energie in einem Fernwärmenetz versorgen kann.

6. Energiemanagementsystem nach einem der vorherigen Ansprüche, **dadurch gekennzeichnet, dass** das Energiemanagementsystem eine Vielzahl an Steuergeräten (1) umfasst, die jeweils in einem Gebäude (2) eines Gebäudeverbunds (17) angeordnet sind, wobei die Vielzahl an Steuergeräten (1) zumindest zeitweise mit der gebäudeexternen Steuereinheit (14) verbindbar sind.

7. Arbeitsverfahren für ein Energiemanagementsystem zum vorausschauenden Ermitteln und Regeln einer Vorlauftemperatur (21) einer Gebäudeheizung (3) zumindest eines Gebäudes (2), mit einem zum Anordnen in dem Gebäude (2) vorgesehenen Steuergerät (1), das eine gebäudeinterne Schnittstelle, über die das Steuergerät (1) bei vorgesehener Anwendung im Gebäude (2) eine Raumtemperatur zumindest eines Gebäuderaums empfängt und mit der Gebäudeheizung (3) verbunden werden kann, über die das Steuergerät (1) bei vorgesehener Anwendung im Gebäude (2) zum Regeln der Vorlauftemperatur (21) eine Soll-Vorlauftemperatur der Gebäudeheizung (3) übermittelt und eine Ist-Vorlauftemperatur von der Gebäudeheizung (3) empfängt, und eine gebäudeexterne Schnittstelle aufweist, und mit einer gebäudeexternen Steuereinheit (14), die bei vorgesehener Anwendung über die gebäudeexterne Schnittstelle mit dem Steuergerät (1) zumindest zeitweise verbindbar ist, um Gebäudedaten vom Steuergerät (1) empfangen und/oder Steuerdaten an das Steuergerät (1) übermitteln zu können,-wobei das Steuergerät (1) und/oder die gebäudeexterne Steuereinheit (14) einen Algorithmus aufweist, mittels dem in Abhängigkeit zumindest von prognostizierten Wetterdaten die Soll-Vorlauftemperatur der Gebäudeheizung (3) bestimmt wird, **dadurch gekennzeichnet,**
**dass** das Steuergerät (1) und/oder die gebäudeexterne Steuereinheit (14) ein erstes Analyseprogramm aufweist, mittels dem eine Wärmekapazität von Wänden (4), eines Dachs (5) und einer Gebäudedämmung (6) des Gebäudes (2) in einem iterativen Prozess ermittelt wird,
**dass** das Energiemanagementsystem derart ausgebildet ist, dass bei überschüssiger Energie die Raumtemperatur bzw. die Gebäudetemperatur bis zu einem bestimmten Betrag über die Soll-Temperatur eingestellt wird, so dass das Gebäude (2) zur Speicherung der überschüssigen Energie überheizt wird,
**dass** das Steuergerät (1) und/oder die gebäudeexterne Steuereinheit (14) ein zweites Analyseprogramm aufweist, mittels dem ein passiver Wärmefluss in das Gebäude (2) hinein und aus dem Gebäude (2) heraus ermittelt und/oder abgeschätzt wird,
**dass** das Steuergerät (1) derart ausgebildet ist, dass diese anhand der Wetterdaten die Energieproduktion einer Energieerzeugungseinheit (12, 13) berechnet,
**dass** das Steuergerät (1) und/oder die gebäudeexterne Steuereinheit (14) ein drittes Analyseprogramm aufweist, mittels dem eine Gebäudereaktion, ein Raumtemperaturverlauf und/oder eine Raumreaktionszeit ermittelt und/oder abgeschätzt wird und
**dass** das Steuergerät (1) und/oder die gebäudeexterne Steuereinheit (14) ein Regelsystem aufweist, mit dem ein Zeitpunkt für die Umwandlung von Energie in Wärme anhand der Wetterdaten, des Gebäudetemperaturverlaufs, der Gebäudereaktionszeit, der Wärmekapazität des Gebäudes (2), der Energieproduktion und des passiven Wärmeflusses ermittelt und die Gebäudeheizung (3) entsprechend gesteuert wird.

8. Verwendung eines Steuergeräts (1) in einem Energiemanagementsystem und/oder einem Arbeitsverfahren nach einem oder mehreren der vorherigen Ansprüche.

## Claims

1. Energy management system for predictive determining and regulating a flow temperature (21) of a building heating system (3) of at least one building (2), having a control device (1) which is provided for arranging in the building (2) and which has a building-internal interface, via which the control device (1) can receive a room temperature of at least one room of a building in the case of an intended application in the building (2), and which can be connected to the building heating system (3) in the case of an intended application in the building (2), via which the control device (1) can transmit a target flow temperature of the building heating system (3) and can receive an actual flow temperature from the building heating system (3) in order to regulate the flow temperature (21), and having a building-external interface, and having a building-external control unit (14) which can be connected to the control device (1) at least temporarily via the building-external interface in the case of an intended application in order to be able to receive building data from the control device (1) and/or to be able to transmit control data to the control device (1), wherein the control device (1) and/or the building-external control unit (14) has an algorithm by means of which the target flow temperature of the building heating system (3) can be determined as a function at least of predicted meteorological data, **characterized in that** the control device (1) and/or the building-external control unit (14) has a first analysis program by means of which a thermal capacity of walls (4), of a roof (5) and of a building insulation (6) of the building (2) can be determined in an iterative process,
the energy management system is designed in such a way that, in the case of excess energy, the room temperature or the building temperature can be set above the target temperature up to a specific amount, with the result that the building (2) can be overheated in order to store the excess energy,
the control device (1) and/or the building-external control unit (14) has a second analysis program by means of which a passive heat flow into the building (2) and out of the building (2) can be determined,
the control device (1) is designed in such a way that it can calculate the energy production of an energy generating unit (12, 13) on the basis of the meteorological data,
the control device (1) and/or the building-external control unit (14) has a third analysis program by means of which a reaction of buildings, a room temperature profile and a room reaction time can be determined, and
the control device (1) and/or the building-external control unit (14) has a regulating system by means of which a point in time for the conversion of energy into heat can be determined on the basis of the meteorological data, the building temperature profile, the building reaction time, the thermal capacity of the building (2), the energy production and the passive heat flow, and the building heating system (3) can be correspondingly controlled.

2. Energy management system according to the preceding claim, **characterized in that** the building-external control unit (14) is an internet-based software platform.

3. Energy management system according to one of the preceding claims, **characterized in that** the building heating system (3) comprises a heating installation arranged in the building (2) and/or a district heating network, and/or **in that** the building heating system (3) comprises a heat pump, a heating rod, a boiler, a buffer store and/or an air conditioning system.

4. Energy management system according to one of the preceding claims, **characterized in that** the control device (1) and/or the building-external control unit (14) is designed in such a way that it can receive and/or store the predicted meteorological data, actual meteorological data, electricity network stability, an electricity market price and/or temperatures from a district heating network via an entry interface.

5. Energy management system according to one of the preceding claims, **characterized in that** the energy management system is designed in such a way that it can supply the building heating system (3) and/or a buffer store, in particular the building capacity of the building, with the energy generated by the energy generating unit (12, 13) and/or with excess energy in a district heating network.

6. Energy management system according to one of the preceding claims, **characterized in that** the energy management system comprises a plurality of control devices (1) which are each arranged in a building (2) of a building network (17), wherein the plurality of control devices (1) can be connected to the building-external control unit (14) at least temporarily.

7. Operating method for an energy management system for predictive determining and regulating a flow temperature (21) of a building heating system (3) of at least one building (2), having a control device (1) which is provided for arranging in the building (2) and which has a building-internal interface, via which the control device (1) receives a room temperature of at least one room of a building in the case of an intended application in the building (2), and can be connected to the building heating system (3), via which the control device (1) transmits a target flow temperature of the building heating system (3) and receives an actual flow temperature from the building heating system (3) in the case of an intended application in the building (2) in order to regulate the flow temperature (21), and having a building-external interface, and having a building-external control unit (14) which can be connected to the control device (1) at least temporarily via the building-external interface in the case of an intended application in order to be able to receive building data from the control device (1) and/or to be able to transmit control data to the control device (1), wherein the control device (1) and/or the building-external control unit (14) has an algorithm by means of which the target flow temperature of the building heating system (3) is determined as a function at least of predicted meteorological data, **characterized in that**
the control device (1) and/or the building-external control unit (14) has a first analysis program by means of which a thermal capacity of walls (4) of a roof (5) and of a building insulation (6) of the building (2) is determined in an iterative process,
that the energy management system is designed in such a way that, in the case of excess energy, the room temperature or the building temperature is set above the target temperature up to a specific amount, with the result that the building (2) is overheated in order to store the excess energy,
that the control device (1) and/or the building-external control unit (14) has a second analysis program by means of which a passive heat flow into the building (2) and out of the building (2) is determined and/or estimated,
that the control device (1) is designed in such a way that it calculates the energy production of an energy generating unit (12, 13) on the basis of the meteorological data,
that the control device (1) and/or the building-external control unit (14) has a third analysis program by means of which a reaction of buildings, a room temperature profile and/or a room reaction time is determined and/or estimated, and
that the control device (1) and/or the building-external control unit (14) has a regulating system by means of which a point in time for the conversion of energy into heat is determined on the basis of the meteorological data, the building temperature profile, the building reaction time, the thermal capacity of the building (2), the energy production and the passive heat flow, and the building heating system (3) is correspondingly controlled.

8. Use of a control device (1) in an energy management system and/or an operating method according to one or more of the preceding claims.

## Revendications

1. Système de gestion d'énergie pour déterminer et régler par anticipation une température aller (21) d'un chauffage de bâtiment (3) d'au moins un bâtiment (2), comprenant un dispositif de contrôle (1) prévu pour être disposé dans le bâtiment (2), qui présente une interface interne au bâtiment, par l'intermédiaire de laquelle le dispositif de contrôle (1) peut recevoir une température ambiante d'au moins une pièce de bâtiment lors d'une application prévue dans le bâtiment (2) et qui peut être reliée au chauffage de bâtiment (3) lors d'une application prévue dans le bâtiment (2), par l'intermédiaire de laquelle le dispositif de contrôle (1) peut transmettre une température aller de consigne du chauffage de bâtiment (3) pour régler la température aller (21) et peut recevoir une température aller réelle du chauffage de bâtiment (3), et une interface externe au bâtiment, et comprenant une unité de contrôle externe au bâtiment (14), qui peut être reliée au moins temporairement au dispositif de contrôle (1) par l'intermédiaire de l'interface externe au bâtiment lors d'une application prévue, afin de pouvoir recevoir des données de bâtiment du dispositif de contrôle (1) et/ou de pouvoir transmettre des données de contrôle au dispositif de contrôle (1), le dispositif de contrôle (1) et/ou l'unité de contrôle externe au bâtiment (14) présentant un algorithme au moyen duquel la température aller de consigne du chauffage de bâtiment (3) peut être déterminée en fonction au moins de données météorologiques prévues, **caractérisé en ce que** le dispositif de contrôle (1) et/ou l'unité de contrôle externe au bâtiment (14) présente un premier programme d'analyse au moyen duquel une capacité thermique de murs (4), d'un toit (5) et d'une isolation de bâtiment (6) du bâtiment (2) peut être déterminée dans un processus itératif,
**en ce que** le système de gestion d'énergie est conçu de telle sorte que, en cas d'énergie excédentaire, la température ambiante ou la température du bâtiment peut être réglée jusqu'à une certaine valeur au-dessus de la température de consigne, de sorte que le bâtiment (2) peut être surchauffé pour stocker l'énergie excédentaire,
le dispositif de contrôle (1) et/ou l'unité de contrôle externe au bâtiment (14) présente un deuxième programme d'analyse au moyen duquel un flux thermique passif peut être déterminé dans le bâtiment (2) et hors du bâtiment (2),
le dispositif de contrôle (1) est conçu de telle sorte que celui-ci peut calculer la production d'énergie d'une unité de production d'énergie (12, 13) à l'aide des données météorologiques,
le dispositif de contrôle (1) et/ou l'unité de contrôle externe au bâtiment (14) présente un troisième programme d'analyse au moyen duquel une réaction du bâtiment, une courbe de température ambiante et un temps de réaction de la pièce peuvent être déterminés, et
le dispositif de contrôle (1) et/ou l'unité de contrôle externe au bâtiment (14) présente un système de réglage au moyen duquel un instant pour la conversion d'énergie en chaleur peut être déterminé à l'aide des données météorologiques, de la courbe de température du bâtiment, du temps de réaction du bâtiment, de la capacité thermique du bâtiment (2), de la production d'énergie et du flux thermique passif et le chauffage de bâtiment (3) peut être commandé en conséquence.

2. Système de gestion d'énergie selon la revendication précédente, **caractérisé en ce que** l'unité de contrôle externe au bâtiment (14) est une plate-forme logicielle basée sur internet.

3. Système de gestion d'énergie selon l'une quelconque des revendications précédentes, **caractérisé en ce que** le chauffage de bâtiment (3) comprend une installation de chauffage disposée dans le bâtiment (2) et/ou un réseau de chauffage urbain et/ou **en ce que** le chauffage de bâtiment (3) comprend une pompe thermique, une barre de chauffage, une chaudière, un réservoir tampon et/ou une installation de climatisation.

4. Système de gestion d'énergie selon l'une quelconque des revendications précédentes, **caractérisé en ce que** le dispositif de contrôle (1) et/ou l'unité de contrôle externe au bâtiment (14) est conçu de telle sorte que celui-ci peut recevoir et/ou stocker les données météorologiques prévues, les données météorologiques réelles, une stabilité du réseau électrique, un prix du marché de l'électricité et/ou des températures d'un réseau de chauffage urbain par l'intermédiaire d'une interface d'entrée.

5. Système de gestion d'énergie selon l'une quelconque des revendications précédentes, **caractérisé en ce que** le système de gestion d'énergie est conçu de telle sorte que celui-ci peut alimenter le chauffage de bâtiment (3) et/ou un réservoir tampon, en particulier la capacité du bâtiment, avec l'énergie produite par l'unité de production d'énergie (12, 13) et/ou une énergie excédentaire dans un réseau de chauffage urbain.

6. Système de gestion d'énergie selon l'une quelconque des revendications précédentes, **caractérisé en ce que** le système de gestion d'énergie comprend une pluralité de dispositifs de contrôle (1), qui sont disposés respectivement dans un bâtiment (2) d'un ensemble de bâtiments (17), la pluralité de dispositifs de contrôle (1) pouvant être reliée au moins temporairement à l'unité de contrôle externe au bâtiment (14).

7. Procédé de travail pour un système de gestion d'énergie pour déterminer et régler par anticipation une température aller (21) d'un chauffage de bâtiment (3) d'au moins un bâtiment (2), comprenant un dispositif de contrôle (1) prévu pour être disposé dans le bâtiment (2), qui présente une interface interne au bâtiment, par l'intermédiaire de laquelle le dispositif de contrôle (1) reçoit une température ambiante d'au moins une pièce de bâtiment lors d'une application prévue dans le bâtiment (2) et peut être reliée au chauffage de bâtiment (3), par l'intermédiaire de laquelle le dispositif de contrôle (1) transmet une température aller de consigne du chauffage de bâtiment (3) pour régler la température aller (21) lors d'une application prévue dans le bâtiment (2) et reçoit une température aller réelle du chauffage de bâtiment (3), et une interface externe au bâtiment, et comprenant une unité de contrôle externe au bâtiment (14), qui peut être reliée au moins temporairement au dispositif de contrôle (1) par l'intermédiaire de l'interface externe au bâtiment lors d'une application prévue, afin de pouvoir recevoir des données de bâtiment du dispositif de contrôle (1) et/ou de pouvoir transmettre des données de contrôle au dispositif de contrôle (1), le dispositif de contrôle (1) et/ou l'unité de contrôle externe au bâtiment (14) présentant un algorithme au moyen duquel la température aller de consigne du chauffage de bâtiment (3) est déterminée en fonction au moins de données météorologiques prévues, **caractérisé en ce que**
le dispositif de contrôle (1) et/ou l'unité de contrôle externe au bâtiment (14) présente un premier programme d'analyse au moyen duquel une capacité thermique de murs (4) d'un toit (5) et d'une isolation de bâtiment (6) du bâtiment (2) est déterminée dans un processus itératif,
**en ce que** le système de gestion d'énergie est conçu de telle sorte que, en cas d'énergie excédentaire, la température ambiante ou la température du bâtiment est réglée jusqu'à une certaine valeur au-dessus de la température de consigne, de sorte que le bâtiment (2) est surchauffé pour stocker l'énergie excédentaire,
**en ce que** le dispositif de contrôle (1) et/ou l'unité de contrôle externe au bâtiment (14) présente un deuxième programme d'analyse au moyen duquel un flux thermique passif est déterminé et/ou estimé dans le bâtiment (2) et hors du bâtiment (2),
**en ce que** le dispositif de contrôle (1) est conçu de telle sorte que celui-ci calcule la production d'énergie d'une unité de production d'énergie (12, 13) à l'aide des données météorologiques,
**en ce que** le dispositif de contrôle (1) et/ou l'unité de contrôle externe au bâtiment (14) présente un troisième programme d'analyse au moyen duquel une réaction du bâtiment, une courbe de température ambiante et/ou un temps de réaction de la pièce sont déterminés et/ou estimés, et
**en ce que** le dispositif de contrôle (1) et/ou l'unité de contrôle externe au bâtiment (14) présente un système de réglage au moyen duquel un instant pour la conversion d'énergie en chaleur est déterminé à l'aide des données météorologiques, de la courbe de température du bâtiment, du temps de réaction du bâtiment, de la capacité thermique du bâtiment (2), de la production d'énergie et du flux thermique passif et le chauffage de bâtiment (3) est commandé en conséquence.

8. Utilisation d'un dispositif de contrôle (1) dans un système de gestion d'énergie et/ou un procédé de travail selon l'une quelconque ou plusieurs des revendications précédentes.
